(19) Europäisches Patentamt
European Patent Office
Office européen des brevets

(11) EP 0 892 020 B1

(12) **FASCICULE DE BREVET EUROPEEN**

(45) Date de publication et mention de la délivrance du brevet:
**12.07.2006 Bulletin 2006/28**

(51) Int Cl.:
*C09C 3/04* (2006.01) *C08F 220/28* (2006.01)
*C08F 220/34* (2006.01)

(21) Numéro de dépôt: **98420119.4**

(22) Date de dépôt: **10.07.1998**

(54) **Utilisation d'un copolymère à structure tensio-active comme agent dispersant et/ou d'aide au broyage**

Verwendung eines Copolymers mit oberflächenaktiver Struktur als Dispergiermittel und/oder Mahlhilfsmittel

Use of a copolymer having surfactant structures as dispersing agent and/or grinding aid

(84) Etats contractants désignés:
**AT BE DE DK ES FI FR GB IT NL PT SE**
Etats d'extension désignés:
**RO SI**

(30) Priorité: **18.07.1997 FR 9709387**

(43) Date de publication de la demande:
**20.01.1999 Bulletin 1999/03**

(73) Titulaire: **COATEX S.A.S.**
**69730 Genay (FR)**

(72) Inventeurs:
- **Mongoin, Jacques**
  **69550 Quincieux (FR)**
- **Egraz, Jean-Bernard**
  **69130 Ecully (FR)**
- **Suau, Jean-Marc**
  **69480 Lucenay (FR)**
- **Jacquemet, Christian**
  **69005 Lyon (FR)**

(56) Documents cités:
**EP-A- 0 011 806**
**EP-A- 0 215 565**
**EP-A- 0 412 027**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 892 020 B1

Printed by Jouve, 75001 PARIS (FR)

## Description

La présente invention concerne l'utilisation d'un copolymère, dont au moins l'un des monomères a une structure tensio-active, comme agent dispersant ou d'aide au broyage de matières minérales en suspension aqueuse, qu'elle que soit la nature de la substance minérale.

En effet, depuis longtemps déjà, il est connu d'utiliser, pour la préparation de produits industriels destinés aux domaines du papier, et notamment pour la charge ou le couchage du papier, des suspensions aqueuses de différentes matières minérales ou charges pigmentaires minérales dont les surfaces des particules ont des affinités différentes vis-à-vis de l'eau.

Ainsi la première catégorie de matières minérales est constituée des substances minérales à surface hydrophile chargée telles que par exemple les carbonates de calcium naturels ou synthétiques, notamment les craies, les calcites ou les marbres, les dolomies ou bien encore les kaolins ainsi que le sulfate de calcium ou les oxydes de titane, le blanc satin, les hydroxydes d'aluminium ou autres.
La deuxième comprend des charges minérales à surface hydrophobe telles que par exemple, le talc, le mica, ou autres.

Or ces deux types de substances minérales n'ont pas le même comportement rhéologique lorsqu'elles sont mises en suspension dans l'eau notamment à forte concentration afin d'être livrées aux papetiers. Elles doivent cependant disposer des mêmes critères de qualité pour l'utilisateur c'est-à-dire doivent disposer d'une viscosité Brookfield ayant une valeur permettant d'éviter tout risque de sédimentation ou de prise en masse des particules de matières minérales rendant ainsi possible une manipulation aisée par l'utilisateur malgré un stockage pendant plusieurs jours dans des cuves sans agitation. De plus, ces suspensions doivent avoir une teneur en matière minérale la plus élevée possible afin de diminuer tous les coûts de transport inhérents à la quantité d'eau présente.

Jusqu'à aujourd'hui, les agents dispersants ou d'aide au broyage classiquement utilisés pour les charges minérales à surface hydrophile sont des polyacrylates de bas poids moléculaire ou de viscosité spécifique inférieure ou égale à 25 (EP 0 100 947, EP 0 542 643, EP 0 542 644).

Mais, ces agents ont le désavantage de ne pas être efficaces pour la mise en suspension et/ou le broyage des substances minérales hydrophobes telles que, le talc ou le mica qui sont couramment utilisées seules ou en mélange.

Pour ce faire, l'Homme du métier connaît d'autres agents qui sont des copolymères dont l'un des monomères a une structure tensio-active (EP 0 003 235, EP 0 215 565). Mais ces copolymères ont alors l'inconvénient de ne pas être efficaces pour la mise en suspension et/ou le broyage de matières minérales à surface hydrophile telles que les carbonates de calcium ou les kaolins, le sulfate de calcium ou les oxydes de titane.

Ainsi jusqu'à ce jour, pour disperser et/ou broyer une matière minérale à surface hydrophobe, il est extrêmement difficile pour l'Homme du métier d'utiliser un agent dispersant et/ou de broyage connu pour son efficacité dispersante et/ou d'aide au broyage de matières minérales à surface hydrophile, et vice versa.

Confrontée à ce problème d'utilisation d'agents dispersants et/ou d'aide au broyage propres à un type de matière minérale, la Demanderesse a trouvé, après de nombreuses recherches que la sélection du radical de la chaîne hydrophobe du monomère tensioactif permet l'utilisation du copolymère comme agent dispersant et/ou d'aide au broyage quelle que soit la namre des surfaces des substances minérales à disperser et/ou broyer.

Ainsi, le but de l'invention est d'obtenir des suspensions aqueuses de matières minérales manipulables aisément par l'utilisateur, ceci quelle que soit la nature des surfaces des matières minérales.

Ce but est atteint grâce à l'utilisation comme agent dispersant et/ou d'aide au broyage d'un copolymère constitué :

a) d'au moins un monomère à insaturation éthylénique et à fonction carboxylique

b) éventuellement d'au moins un monomère à insaturation éthylénique et à fonction sulfonique ou phosphorique ou leur mélange

c) éventuellement d'au moins un monomère à insaturation éthylénique et sans fonction carboxylique

d) d'au moins un monomère tensioactif oxyalkylé à insaturation éthylénique et terminé par une chaîne hydrophobe.

L'utilisation d'un copolymère, selon l'invention, comme agent dispersant et/ou d'aide au broyage de matières minérales en suspension aqueuse est caractérisée en ce que le dit copolymère est constitué :

a) d'au moins un monomère à insaturation éthylénique et à fonction carboxylique choisi obligatoirement parmi les monoacides, tels que l'acide acrylique, méthacrylique, crotonique, isocrotonique, cinnamique, auxquels peuvent éventuellement s'ajouter les diacides, tels que l'acide itaconique, fumarique, maléique, citraconique, ou encore les anhydrides d'acides carboxyliques, tels que l'anhydride maléique et les hémiesters de diacides, tels que les mo-

noesters en $C_1$ à $C_4$, des acides maléique ou itaconique, ou leurs mélanges,

b) éventuellement d'au moins un monomère à insaturation éthylénique et à fonction sulfonique choisi parmi l'acide acrylamido-méthyl-propane-sulfonique, le méthallylsufonate de sodium, l'acide vinyl sulfonique et l'acide styrène sulfonique, ou à fonction phosphorique choisi parmi le phosphate de méthacrylate d'ethylène glycol, phosphate de méthacrylate de propylène glycol, phosphate d'acrylate d'éthylène glycol, phosphate d'acrylate de propylène glycol et leurs éthoxylats ou leurs mélanges,

c) éventuellement d'au moins un monomère à insaturation éthylénique et sans fonction carboxylique, choisi dans le groupe constitué par les esters des acides acrylique ou méthacrylique, tels que les acrylates ou méthacrylates de méthyle, éthyle, butyle, 2-éthyl-hexyle, ou par l'acrylonitrile, le méthacrylonitrile, l'acétate de vinyle, le styrène, le méthylstyrène, le düsobutylène, la vinylpyrrolidone, la vinylcaprolactame, ou encore par les amides insaturés tels que l'acrylamide, le méthacrylamide ou leurs dérivés substitués comme par exemple le diméthylaminopropyle acrylamide ou méthacrylamide, les esters acryliques ou méthacryliques de glycol, le méthacrylamido-propyl-triméthyl-ammonium chlorure ou sulfate, le méthacrylate de triméthyl-ammonium-éthyl chlorure ou sulfate, ainsi que leurs homologues en acrylate et en acrylamide quaternisés et/ou le diméthyldiallylammonium chlorure,

d) d'au moins un monomère oxyalkylé à insaturation éthylénique et terminé par une chaîne hydrophobe, de formule générale (I) :

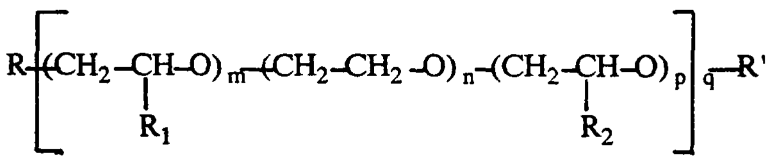

dans laquelle :

- m et p représentent un nombre de motifs d'oxyde d'alkylène inférieur ou égal à 100,
- n représente un nombre de motifs d'oxyde d'éthylène inférieur ou égal à 100,
- q un nombre au moins égal à 1 et tels que :

$$0 < q(n+m+p) \leq 100$$

$R_1$ l'hydrogène ou le radical méthyle ou éthyle,
$R_2$ l'hydrogène ou le radical méthyle ou éthyle.
R représente le radical insaturé polymérisable, appartenant au groupe des esters acrylique, méthacrylique, maléique, itaconique, crotonique, vinylphtalique ainsi que les insaturés uréthannes tels que par exemple les acryluréthanne, méthacryluréthanne, $\alpha$-$\alpha$' diméthyl-m-isopropenyl-benzyluréthanne, allyluréthanne.
R' représente le radical hydrophobe choisi parmi le radical tristyrylphényle ou encore les groupes linéaires ou ramifiés alkyle, alkylaryle, arylalkyle, aryle ayant au moins 8 atomes de carbone ou bien les dialkylamines ayant au moins 8 atomes de carbone lorsque R représente les insaturés uréthannes tels que par exemple les acryluréthanne, méthacryluréthanne, $\alpha$-$\alpha$' diméthyl-m-isopropenyl- benzyluréthanne, allyluréthanne , et
R' représente le radical hydrophobe choisi parmi le radical tristyrylphényle ou encore les groupes linéaires ou ramifiés alkyle, alkylaryle, arylalkyle, aryle ayant au moins 30 atomes de carbone ou bien les dialkylamines ayant au moins 22 atomes de carbone lorsque R représente le radical insaturé polymérisable, appartenant au groupe des esters acrylique, méthacrylique, maléique, itaconique, crotonique, vinylphtalique

le total des constituants (a), (b), (c) et (d) étant égal à 100
et en ce qu'il possède une viscosité spécifique au plus égale à 50 et préférentiellement au plus égale à 25.

Dans la suite de la description, le monomère (d) sera dénommé monomère spécial. Plus particulièrement l'utilisation du copolymère précité est caractérisée en ce que le dit copolymère est constitué, exprimé en poids :

a) de 99 % à 10 % et encore plus particulièrement pour des raisons de procédé de copolymérisation de 97 % à 50 % d'au moins un monomère à insaturation éthylénique et à fonction carboxylique, choisi obligatoirement parmi les monoacides, tels que l'acide acrylique, méthacrylique, crotonique, isocrotonique, cinnamique, auxquels peuvent éventuellement s'ajouter les diacides, tels que l'acide itaconique, fumarique, maléique, citraconique, ou encore les anhydrides d'acides carboxyliques, tels que l'anhydride maléique et les hémiesters de diacides, tels que les monoesters en $C_1$ à $C_4$, des acides maléique ou itaconique, ou leurs mélanges,

b) de 0 à 50 % d'au moins un monomère à insaturation éthylénique et à fonction sulfonique choisi parmi l'acide acrylamido-méthyl-propane-sulfonique, le méthallylsufonate de sodium, l'acide vinyl sulfonique et l'acide styrène sulfonique, ou à fonction phosphorique choisi parmi le phosphate de méthacrylate d'ethylène glycol, phosphate de méthacrylate de propylène glycol, phosphate d'acrylate d'éthylène glycol, phosphate d'acrylate de propylène glycol et leurs éthoxylats ou leurs mélanges,

c) de 0 % à 50 %, d'au moins un monomère à insaturation éthylénique et sans fonction carboxylique, choisi dans le groupe constitué par les esters des acides acrylique ou méthacrylique, tels que les acrylates ou méthacrylates de méthyle, éthyle, butyle, 2-éthyl-hexyle, ou par l'acrylonitrile, le méthacrylonitrile, l'acétate de vinyle, le styrène, le méthylstyrène, le diisobutylène, la vinylpyrrolidone, la vinylcaprolactame, ou encore par les amides insaturés tels que l'acrylamide, le méthacrylamide ou leurs dérivés substitués comme par exemple le diméthylaminopropyle acrylamide ou méthacrylamide, les esters acryliques ou méthacryliques de glycol, le méthacrylamidopropyl-triméthylammonium chlorure ou sulfate, le méthacrylate de triméthyl-ammonium-éthyl chlorure ou sulfate, ainsi que leurs homologues en acrylate et en acrylamide quaternisés et/ou le diméthyldiallylammonium chlorure,

d) de 1 % à 90 % et encore plus particulièrement pour des raisons de procédé de copolymérisation de 3 % à 50 % d'au moins un monomère oxyalkylé à insaturation éthylénique et terminé par une chaîne hydrophobe, de formule générale (I) :

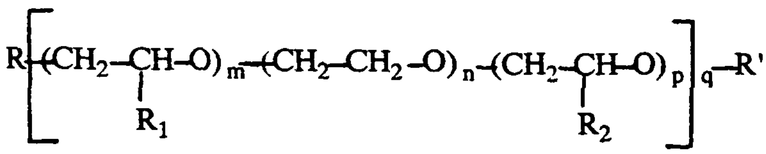

dans laquelle :

- m et p représentent un nombre de motifs d'oxyde d'alkylène inférieur ou égal à 100,
- n représente un nombre de motifs d'oxyde d'éthylène inférieur ou égal à 100,
  q un nombre au moins égal à 1 et tels que :

$$0 < q(n+m+p) \leq 100$$

$R_1$ l'hydrogène ou le radical méthyle ou éthyle,
$R_2$ l'hydrogène ou le radical méthyle ou éthyle.
R représente le radical insaturé polymérisable, appartenant au groupe des esters acrylique, méthacrylique, maléique, itaconique, crotonique, vinylphtalique ainsi que les insaturés uréthannes tels que par exemple les acryluréthanne, méthacryluréthanne, α-α' diméthyl-m-isopropenylbenzyluréthanne, allyluréthanne.
R' représente le radical hydrophobe choisi parmi le radical tristyrylphényle ou encore les groupes linéaires ou ramifiés alkyle, alkylaryle, arylalkyle, aryle ayant au moins 8 atomes de carbone ou bien les dialkylamines ayant au moins 8 atomes de carbone lorsque R représente les insaturés uréthannes tels que par exemple les acryluréthanne, méthacryluréthanne, α-α' diméthyl-m-isopropenyl- benzyluréthanne, allyluréthanne , et
R' représente le radical hydrophobe choisi parmi le radical tristyrylphényle ou encore les groupes linéaires ou ramifiés alkyle, alkylaryle, arylalkyle, aryle ayant au moins 30 atomes de carbone ou bien les dialkylamines ayant au moins 22 atomes de carbone lorsque R représente le radical insaturé polymérisable, appartenant au groupe des esters acrylique, méthacrylique, maléique, itaconique, crotonique, vinylphtalique

le total des constituants (a), (b), (c) et (d) étant égal à 100
et en ce qu'il possède une viscosité spécifique au plus égale à 50 et préférentiellement au plus égale à 25.

Le copolymère utilisé selon l'invention est obtenu par des procédés connus de copolymérisation radicalaire en solution, en émulsion directe ou inverse, en suspension ou précipitation dans des solvants appropriés, en présence de systèmes catalytiques et d'agents de transfert connus.

Ce copolymère obtenu sous forme acide et éventuellement distillé, peut être également partiellement ou totalement neutralisé par un ou plusieurs agents de neutralisation disposant d'une fonction monovalente ou d'une fonction polyvalente tels que par exemple ceux choisis dans le groupe constitué par les cations alcalins, en particulier le sodium, le potassium, l'ammonium ou les amines primaires, secondaires ou tertiaires aliphatiques et/ou cycliques telles que par exemple la stéarylamine, les éthanolamines (mono-, di-, triéthanolamine), la mono et diéthylamine, la cyclohexylamine, la méthylcyclohexylamine ou bien encore ceux choisis dans le groupe constitué par les cations divalents alcalino-terreux, en particulier le magnésium et le calcium, ou encore le zinc, de même que par les cations trivalents, dont en particulier l'aluminium, ou encore, par certains cations de valence plus élevée.

Chaque agent de neutralisation intervient alors selon des taux de neutralisation propres à chaque fonction de valence.

Selon une autre variante, le copolymère issu de la réaction de copolymèrisation peut éventuellement avant ou après la réaction de neutralisation totale ou partielle, être traité et séparé en plusieurs phases, selon des procédés statiques ou dynamiques connus de l'homme de l'art, par un ou plusieurs solvants polaires appartenant notamment au groupe constitué par l'eau, le méthanol, l'éthanol, le propanol, l'isopropanol, les butanols, l'acétone, le tétrahydrofurane ou leurs mélanges.

L'une des phases correspond alors au copolymère utilisé selon l'invention comme agent dispersant et/ou d'aide au broyage de matières minérales en suspension aqueuse.

La viscosité spécifique du copolymère est symbolisée par la lettre «η» et est déterminée de la manière suivante :

On prend une solution de polymérisat de façon à obtenir une solution correspondant à 2,5 g de polymère sec neutralisé à la soude et à 50 ml d'une solution d'eau bipermutée. Puis, on mesure avec un viscosimètre capillaire de constante de Baume égale à 0,000105 placé dans un bain thermostaté à 25°C le temps d'écoulement d'un volume donné de la solution précitée contenant le copolymère, ainsi que le temps d'écoulement du même volume de la solution d'eau bipermutée dépourvue dudit copolymère. Il est alors possible de définir la viscosité spécifique «η » grâce à la relation suivante :

$$« \eta » = \frac{\text{(temps d'écoulement de la solution de polymère)} - \text{(temps d'écoulement de la solution d'eau permutée}}{\text{temps d'écoulement de la solution d'eau permutée}}$$

Le tube capillaire est généralement choisi de telle manière que le temps d'écoulement de la solution d'eau permutée dépourvue de copolymère soit d'environ 90 à 100 secondes, donnant ainsi des mesures de viscosité spécifique d'une très bonne précision.
En pratique, une manière d'effectuer le délitage ou la mise en suspension de la ou des substances minérales à disperser consiste à préparer sous agitation une solution aqueuse de l'agent de dispersion dans laquelle est introduite la ou les substances minérales à disperser qui peuvent être d'origines très diverses et se classer en deux catégories.

La première catégorie est constituée des substances minérales à surface hydrophile chargée telles que par exemple les carbonates de calcium naturels ou synthétiques notamment les craies, les calcites, les marbres ou les dolomies ou bien encore les kaolins, le sulfate de calcium, les oxydes de titane, ou le blanc satin ou les hydroxydes d'aluminium ou tout autre minéral à surface hydrophile.

La deuxième comprend des charges minérales à surface hydrophobe telles que par exemple le talc ou le mica ou tout autre minéral à surface hydrophobe.

De même en pratique, l'opération de broyage de la ou des substances minérales à affiner consiste à broyer la ou les substances minérales avec un corps broyant en particules très fines dans un milieu aqueux contenant l'agent d'aide au broyage. On forme alors une suspension aqueuse de la ou des substances minérales à broyer.

A la suspension de la ou des substances minérales à broyer, on ajoute le corps broyant de granulométrie avantageusement comprise entre 0,20 et 4 millimètres. Le corps broyant se présente en général sous la forme de particules de matériaux aussi divers que l'oxyde de silicium, l'oxyde d'aluminium, l'oxyde de zirconium ou de leurs mélanges, ainsi que les résines synthétiques de haute dureté, les aciers, ou autres. Un exemple de composition de tels

corps broyants est donné par le brevet FR 2 303 681 qui décrit des éléments broyants formés de 30 à 70 % en poids d'oxyde de zirconium, 0,1 à 5 % d'oxyde d'aluminium et de 5 à 20 % d'oxyde de silicium.

Le corps broyant est de préférence ajouté à la suspension en une quantité telle que le rapport en poids entre ce matériau de broyage et la substance minérale à broyer soit d'au moins 2/1, ce rapport étant de préférence compris entre les limites 3/1 et 5/1.

Le mélange de la suspension et du corps broyant est alors soumis à l'action mécanique de brassage, telle que celle qui se produit dans un broyeur classique à micro-éléments.

Selon l'invention, l'agent de dispersion et/ou d'aide au broyage est également introduit au sein du mélange formé par la suspension aqueuse de substances minérales et par le corps broyant à raison de 0,05 % à 5 % en poids de la fraction séchée desdits polymères par rapport à la masse sèche de la ou des substances minérales à affiner.

Le temps nécessaire pour aboutir à une excellente finesse de la substance minérale après broyage varie selon la nature et la quantité des substances minérales à broyer, et selon le mode d'agitation utilisé et la température du milieu pendant l'opération de broyage.

La portée et l'intérêt de l'invention seront mieux perçus grâce aux exemples suivants qui ne sauraient être limitatifs :

<u>EXEMPLE 1 :</u>

Cet exemple concerne l'utilisation d'un copolymère dont au moins l'un des monomères a une structure tensioactive dans la préparation de suspensions aqueuses de carbonate de calcium.

A cet effet pour chacun des essais suivants, effectués à partir d'un marbre provenant du gisement de Gummern (Autriche) de granulométrie dont 90 % des particules ont un diamètre inférieur à 2 micromètres, on introduit, en pluie et sous agitation dans un bécher de deux litres contenant de l'eau, une quantité dudit marbre nécessaire pour obtenir une suspension à 65 % de concentration en matière sèche. Ce bécher contient en outre une quantité de copolymère à tester correspondant à 0,5 % en poids de copolymère sec par rapport au poids total de matière sèche présente dans la suspension.

Après 20 minutes d'agitation, on mesure, à température ambiante, les viscosités Brookfield à l'aide d'un viscosimètre Brookfield type RVT à 10 tours par minute (t/min) et 100 t/min à l'aide du mobile adéquat.

<u>Essai n° 1 :</u>

Cet essai, illustrant l'art antérieur, met en oeuvre un polyacrylate de sodium de viscosité spécifique égale à 0,45.

<u>Essai n° 2 :</u>

Cet essai, illustrant l'art antérieur, met en oeuvre un mélange constitué de 25 parts en poids d'un polyacrylate de sodium de viscosité spécifique égale à 0,45 et de 75 parts en poids d'un polyoxyde d'alkylène commercialisé sous le nom de Pluronic PE 4300 par la société BASF.

<u>Essai n° 3 :</u>

Cet essai, illustrant l'invention, met en oeuvre un polymère neutralisé à 100 % par la soude, de viscosité spécifique égale à 4,35 et composé, en pourcentage massique, de :

90 % d'acide acrylique
10 % de méthacrylate de tristyryl phénol éthoxylé avec 25 moles d'oxyde d'éthylène.

<u>Essai n° 4 :</u>

Cet essai, illustrant l'invention, met en oeuvre un polymère neutralisé à 100 % par la soude, de viscosité spécifique égale à 4,38 et composé, en pourcentage massique, de :

90 % d'acide acrylique
10 % de méthacrylate de tristyryl phénol éthoxylé avec 40 moles d'oxyde d'éthylène.

<u>Essai n° 5 :</u>

Cet essai, illustrant l'invention, met en oeuvre un polymère neutralisé à 100 % par la soude, de viscosité

spécifique égale à 4,43 et composé, en pourcentage massique, de :

90 % d'acide acrylique
10 % de méthacrylate de tristyryl phénol éthoxylé avec 60 moles d'oxyde d'éthylène.

Essai n° 6 :

Cet essai, illustrant l'invention, met en oeuvre un polymère neutralisé à 100 % par la soude, de viscosité spécifique égale à 2,54 et composé, en pourcentage massique, de :

95 % d'acide acrylique
5 % de méthacryluréthanne, de formule générale (I) dans laquelle le radical hydrophobe R' est un groupe alkyle linéaire à 22 atomes de carbone, m et p sont égaux à 0, q=1 et n égal 25.

Essai n° 7 :

Cet essai, illustrant l'invention, met en oeuvre un polymère neutralisé à 100 % par la soude, de viscosité spécifique égale à 1,52 et composé, en pourcentage massique, de :

95 % d'acide acrylique
5 % de méthacrylate, de formule générale (I) dans laquelle le radical hydrophobe R' est un groupe -N-(R"R'") avec R" et R"' des chaînes alkyles linéaires à 12 atomes de carbone, m et p sont égaux à 0, q=1 et n égal 50.

Essai n° 8 :

Cet essai, illustrant lïnvention, met en oeuvre un polymère neutralisé à 100 % par la soude, de viscosité spécifique égale à 2,47 et composé, en pourcentage massique, de :

95 % d'acide acrylique
5 % de méthacryluréthanne, de formule générale (I) dans laquelle le radical hydrophobe R' est un groupe alkyle ramifié à 28 atomes de carbone, m et p sont égaux à 0, q = 1 et n égal 25.

Essai n° 9 :

Cet essai, illustrant l'invention, met en oeuvre un polymère neutralisé à 100 % par la soude, de viscosité spécifique égale à 1,79 et composé, en pourcentage massique, de :

95 % d'acide acrylique
5 % de méthacryluréthanne, de formule générale (I) dans laquelle le radical hydrophobe R' est un groupe alkyle ramifié à 30 atomes de carbone, m et p sont égaux à 0, q = 1 et n égal 25.

Essai n° 10 :

Cet essai, illustrant l'invention, met en oeuvre un polymère neutralisé à 100 % par la soude, de viscosité spécifique égale à 2,59 et composé, en pourcentage massique, de :

90 % d'acide acrylique
10 % de méthacrylate, de formule générale (I) dans laquelle le radical hydrophobe R' est un groupe alkyle ramifié à 32 atomes de carbone, m et p sont égaux à 0,q=1 et n égal 25.

Essai n° 11 :

Cet essai, illustrant l'invention, met en oeuvre un polymère neutralisé à 100 % par la soude, de viscosité spécifique égale à 5,49 et composé, en pourcentage massique, de :

80 % d'acide acrylique
2 % d'acrylate d'éthyle
8 % d'acide méthacrylique

10 % de méthacryluréthanne, de formule générale (I) dans laquelle le radical hydrophobe R' est un radical tristyrylphényl, m et p sont égaux à 0, q =1 et n égal 25.

Essai n° 12 :

Cet essai, illustrant l'invention, met en oeuvre un polymère neutralisé à 100 % par la soude, de viscosité spécifique égale à 3,02 et composé, en pourcentage massique, de :

97 % d'acide acrylique
3 % de méthacrylate de tristyryl phénol éthoxylé avec 25 moles d'oxyde d'éthylène.

Essai n° 13 :

Cet essai, illustrant l'invention, met en oeuvre un polymère neutralisé à 100 % par la soude, de viscosité spécifique égale à 3,94 et composé, en pourcentage massique, de :

93 % d'acide acrylique
7 % de méthacrylate de tristyryl phénol éthoxylé avec 25 moles d'oxyde d'éthylène.

Essai n° 14 :

Cet essai, illustrant l'invention, met en oeuvre un polymère neutralisé à 100 % par la soude, de viscosité spécifique égale à 3,74 et composé, en pourcentage massique, de

85 % d'acide acrylique
15 % de méthacrylate de tristyryl phénol éthoxylé avec 25 moles d'oxyde d'éthylène.

Essai n° 15 :

Cet essai, illustrant l'invention, met en oeuvre un polymère neutralisé à 100 % par la soude, de viscosité spécifique égale à 7,53 et composé, en pourcentage massique, de :

85 % d'acide acrylique
5 % d'acide méthacrylique
10 % de méthacrylate de tristyryl phénol éthoxylé avec 25 moles d'oxyde d'éthylène.

Essai n° 16 :

Cet essai, illustrant l'invention, met en oeuvre un polymère neutralisé à 100 % par la soude, de viscosité spécifique égale à 5,58 et composé, en pourcentage massique, de :

85 % d'acide acrylique
5 % d'acide itaconique
10 % de méthacrylate de tristyryl phénol éthoxylé avec 25 moles d'oxyde d'éthylène.

Essai n° 17 :

Cet essai, illustrant l'invention, met en oeuvre un polymère neutralisé à 100 % par la soude, de viscosité spécifique égale à 7,16 et composé, en pourcentage massique, de :

85 % d'acide acrylique
5 % d'acide maléique
10 % de méthacrylate de tristyryl phénol éthoxylé avec 25 moles d'oxyde d'éthylène.

Essai n° 18 :

Cet essai, illustrant l'invention, met en oeuvre un polymère neutralisé à 100 % par la soude, de viscosité spécifique égale à 6,68 et composé, en pourcentage massique, de :

85 % d'acide acrylique
5 % d'acide acrylamido-méthyl-propane-sulfonique
10 % de méthacrylate de tristyryl phénol éthoxylé avec 25 moles d'oxyde d'éthylène.

Essai n° 19 :

Cet essai, illustrant l'invention, met en oeuvre un polymère neutralisé à 100 % par la soude, de viscosité spécifique égale à 4,38 et composé, en pourcentage massique, de :

85 % d'acide acrylique
5 % d'acrylamide
10 % de méthacrylate de tristyryl phénol éthoxylé avec 25 moles d'oxyde d'éthylène.

Essai n° 20 :

Cet essai, illustrant l'invention, met en oeuvre un polymère neutralisé à 100 % par la soude, de viscosité spécifique égale à 5,71 et composé, en pourcentage massique, de :

85 % d'acide acrylique
5 % de phosphate de méthacrylate d'éthylène glycol
10 % de méthacrylate de tristyryl phénol éthoxylé avec 25 moles d'oxyde d'éthylène.

Essai n° 21 :

Cet essai, illustrant l'invention, met en oeuvre un polymère neutralisé à 100 % par la soude, de viscosité spécifique égale à 5,49 et composé, en pourcentage massique, de :

80 % d'acide acrylique
2 % d'acrylate d'éthyle
8 % d'acide méthacrylique
10 % de méthacryluréthanne, de formule générale (I) dans laquelle le radical hydrophobe R' est un radical tristyrylphényl, m et p sont égaux à 0,q=1 et n égal 25.

Essai n° 22 :

Cet essai, illustrant l'invention, met en oeuvre un polymère neutralisé à 100 % par la soude, de viscosité spécifique égale à 0,67 et composé, en pourcentage massique, de :

95 % d'acide acrylique
5 % de méthacrylate de tristyryl phénol éthoxylé avec 25 moles d'oxyde d'éthylène.

Essai n° 23 :

Cet essai, illustrant l'invention, met en oeuvre un polymère neutralisé à 100 % par la soude, de viscosité spécifique égale à 1,94 et composé, en pourcentage massique, de :

90 % d'acide acrylique
10 % de méthacrylate de tristyryl phénol éthoxylé avec 25 moles d'oxyde d'éthylène.

Essai n° 24 :

Cet essai, illustrant l'invention, met en oeuvre un polymère neutralisé à 100 % par la soude, de viscosité spécifique égale à 2,66 et composé, en pourcentage massique, de :

90 % d'acide acrylique
10 % de méthacrylate de tristyryl phénol éthoxylé avec 25 moles d'oxyde d'éthylène.

Essai n° 25 :

Cet essai, illustrant l'invention, met en oeuvre un polymère neutralisé à 100 % par la soude, de viscosité spécifique égale à 12,04 et composé, en pourcentage massique, de :

90 % d'acide acrylique
10 % de méthacrylate de tristyryl phénol éthoxylé avec 25 moles d'oxyde d'éthylène.

Essai n° 26 :

Cet essai, illustrant l'invention, met en oeuvre un polymère neutralisé à 70 % par la soude, de viscosité spécifique égale à 4,35 et composé, en pourcentage massique, de :

90 % d'acide acrylique
10 % de méthacrylate de tristyryl phénol éthoxylé avec 25 moles d'oxyde d'éthylène.

Tous les résultats expérimentaux sont consignés dans le tableau 1 suivant.

- TABLEAU 1 -

| | Essai n° | Viscosité Brooklield de la suspension en mPa.s | |
|---|---|---|---|
| | | 10 t/min | 100 t/min |
| Art antérieur | 1 | 2000 | 350 |
| Art antérieur | 2 | 24000 | 6200 |
| Invention | 3 | 800 | 210 |
| Invention | 4 | 1000 | 225 |
| Invention | 5 | 1900 | 320 |
| Invention | 6 | 1280 | 270 |
| Invention | 7 | 1400 | 260 |
| Invention | 8 | 840 | 210 |
| Invention | 9 | 1040 | 230 |
| Invention | 10 | 1150 | 230 |
| Invention | 11 | 750 | 210 |
| Invention | 12 | 1250 | 270 |
| Invention | 13 | 1100 | 230 |
| Invention | 14 | 950 | 230 |
| Invention | 15 | 600 | 180 |
| Invention | 16 | 600 | 175 |
| Invention | 17 | 700 | 215 |
| Invention | 18 | 800 | 230 |
| Invention | 19 | 1100 | 290 |
| Invention | 20 | 600 | 185 |
| Invention | 21 | 750 | 210 |
| Invention | 22 | 1850 | 325 |
| Invention | 23 | 1000 | 215 |
| Invention | 24 | 1100 | 290 |
| Invention | 25 | 650 | 215 |

Suite de tableau

| | Essai n° | Viscosité Brooklield de la suspension en mPa.s | |
|---|---|---|---|
| | | 10 t/min | 100 t/min |
| Invention | 26 | 190 | 110 |

La lecture du tableau 1 permet de mettre en évidence l'obtention de suspensions aqueuses de carbonate de calcium selon l'invention ayant des viscosités Brookfield faibles.

Cette lecture permet en outre de constater que l'utilisation d'un polyacrylate en association avec un polyoxyde d'alkylène, formulation couramment utilisée pour la mise en suspension de substances minérales à surface hydrophobe ne permet pas d'obtenir des suspensions de carbonate de calcium à faible viscosité Brookfield.

EXEMPLE 2

Cet exemple illustre l'invention et concerne l'utilisation d'un copolymère dont au moins l'un des monomères a une structure tensio-active dans la préparation d'une suspension aqueuse de carbonate de calcium à teneur en matière sèche égale à 45 %.

A cet effet pour l'essai suivant n° 27, effectué à partir d'un marbre provenant du gisement de Gummern (Autriche) de granulométrie dont 90 % des particules ont un diamètre inférieur à 2 micromètres, on introduit, en pluie et sous agitation dans un bécher de deux litres contenant de l'eau, une quantité dudit marbre nécessaire pour obtenir une suspension à 45 % de concentration en matière sèche. Ce bécher contient en outre une quantité de copolymère à tester correspondant à 0,23 % en poids de copolymère sec par rapport au poids total de matière sèche présente dans la suspension.

Le copolymère mis en oeuvre est un polymère neutralisé à 75 % par la soude, et issu d'un procédé de fractionnement, de viscosité spécifique égale à 4,35 et composé, en pourcentage massique, de :

90 % d'acide acrylique
10 % de méthacrylate de tristyryl phénol éthoxylé avec 25 moles d'oxyde d'éthylène.

Après 20 minutes d'agitation, on mesure, à température ambiante, les viscosités Brookfield à l'aide d'un viscosimètre Brookfield type RVT à 10 tours par minute (t/min) et 100 t/min à l'aide du mobile adéquat.
Ces viscosités sont respectivement égales à 790 mPa.s et 110 mPa.s.

EXEMPLE 3 :

Cet exemple concerne également l'utilisation d'un copolymère dont au moins l'un des monomères a une structure tensio-active dans la préparation de suspensions aqueuses de carbonate de calcium mais de granulométrie plus grossière.
A cet effet, pour chacun des essais suivants effectués à partir d'un marbre provenant d'un gisement norvégien de granulométrie dont 60 % des particules ont un diamètre inférieur à 2 micromètres, on introduit, en pluie et sous agitation dans un bécher de deux litres contenant de l'eau, une quantité dudit marbre nécessaire pour obtenir une suspension à 75 % de concentration en matière sèche. Ce bécher contient en outre une quantité de copolymère à tester correspondant à 0,5 % en poids de copolymère sec par rapport au poids total de matière sèche présente dans la suspension.

Après 20 minutes d'agitation, on mesure, à température ambiante, les viscosités Brookfield (TO) à l'aide d'un viscosimètre Brookfield type DVII à 100 t/min à l'aide du mobile adéquat.

Ces viscosités Brookfield sont également déterminées après 24 heures, 2 jours, 3 jours et une semaine de stockage sans agitation.

La mesure de la viscosité Brookfield avant agitation (viscosité AVAG) après 7 jours de stockage ayant été effectuée, l'échantillon est agité afin de déterminer la viscosité Brookfield après agitation (viscosité APAG).

Par ailleurs, ces échantillons sont dilués à 72 % et stockés pendant 7 jours afin de regarder s'il y a sédimentation par introduction d'une spatule jusqu'au fond du flacon.

Essai n° 28 :

Cet essai, illustrant l'art antérieur, met en oeuvre un polyacrylate de sodium de viscosité spécifique égale à 0,45.

Essai n° 29 :

Cet essai, illustrant l'invention, met en oeuvre un polymère neutralisé à 100 % par la soude, de viscosité spécifique égale à 1,94 et composé, en pourcentage massique, de :

90 % d'acide acrylique
10 % de méthacrylate de tristyryl phénol éthoxylé avec 25 moles d'oxyde d'éthylène.

Essai n° 30 :

Cet essai, illustrant l'invention, met en oeuvre un polymère neutralisé à 100 % par la soude, de viscosité spécifique égale à 3,02 et composé, en pourcentage massique, de :

97 % d'acide acrylique
3 % de méthacrylate de tristyryl phénol éthoxylé avec 25 moles d'oxyde d'éthylène.

Essai n° 31 :

Cet essai, illustrant l'invention, met en oeuvre un polymère neutralisé à 100 % par la soude, de viscosité spécifique égale à 4,38 et composé, en pourcentage massique, de :

85 % d'acide acrylique
5 % d'acrylamide
10 % de méthacrylate de tristyryl phénol éthoxylé avec 25 moles d'oxyde d'éthylène.

Essai n° 32 :

Cet essai, illustrant l'invention, met en oeuvre un polymère neutralisé à 100 % par la soude, de viscosité spécifique égale à 5,49 et composé, en pourcentage massique, de :

80 % d'acide acrylique
2 % d'acrylate d'éthyle
8 % d'acide méthacrylique
10 % de méthacryluréthanne, de formule générale (I) dans laquelle le radical hydrophobe R' est un radical tristyrylphényl, m et p sont égaux à 0,q=1 et n égal 25.

Tous les résultats expérimentaux sont consignés dans le tableau 2 suivant.

-TABLEAU 2-

| | Essai n° | Viscosité Brookfield en mPa.s à 100 t/min | | | | | | |
|---|---|---|---|---|---|---|---|---|
| | | T0 | 24 heures AVAG | 2 jours AVAG | 3 jours AVAG | 7 jours AVAG | 7 jours APAG | Sédimentation |
| Art antérieur | 28 | 1650 | 1070 | 1200 | 1375 | 1760 | 1790 | NON |
| Invention | 29 | 268 | 431 | 451 | 450 | 508 | 301 | NON |
| Invention | 30 | 309 | 594 | 622 | 616 | 641 | 309 | NON |
| Invention | 31 | 551 | 710 | 754 | 726 | 759 | 509 | NON |
| Invention | 32 | 526 | 769 | 809 | 818 | 849 | 512 | NON |

La lecture du tableau 2 permet de mettre en évidence l'obtention de suspensions aqueuses de carbonate de calcium ayant des viscosités Brookfield faibles et stables dans le temps et ne présentant aucune tendance à sédimenter malgré la granulométrie moins fine des particules constitutives.

EXEMPLE 4 :

Cet exemple concerne l'utilisation d'un copolymère dont au moins l'un des monomères a une structure tensio-active dans la préparation de suspensions aqueuses de talc.

Dans ce but, avec le même mode opératoire à l'exception de la durée d'agitation qui est de 45 minutes et le même matériel que ceux utilisés dans l'exemple 1, on mélange du talc Finntalc C10 de la société Finnminerals avec une quantité d'eau nécessaire pour obtenir une suspension à 65 % de concentration en matière sèche et une quantité de copolymère totalement neutralisé à tester correspondant à 2,0 % en poids sec de copolymère acide sec par rapport au poids total de matière sèche présente dans la suspension.

Essai n° 33 :

Cet essai, illustrant l'art antérieur, met en oeuvre un polyacrylate de sodium de viscosité spécifique égale à 0,45.

La mise en suspension est impossible à cause du blocage de l'agitateur dû à une viscosité trop élevée.

Essai n° 34 :

Cet essai, illustrant l'art antérieur, met en oeuvre un mélange constitué de 25 parts en poids d'un polyacrylate de sodium de viscosité spécifique égale à 0,45 et de 75 parts en poids d'un polyoxyde d'alkylène commercialisé sous le nom de Pluronic PE 4300 par la société BASF.

Essai n° 35 :

Cet essai, illustrant l'invention, met en oeuvre un polymère, qui après neutralisation à 100 % par la soude, est un polymère de viscosité spécifique égale à 7,5 et composé, en pourcentage massique, de :

90 % d'acide acrylique
10 % de méthacrylate de tristyryl phénol éthoxylé avec 16 moles d'oxyde d'éthylène.

Essai n° 36 :

Cet essai, illustrant l'invention, met en oeuvre un polymère, qui après neutralisation à 100 % par la soude, est un polymère de viscosité spécifique égale à 4,0 et composé, en pourcentage massique, de :

90 % d'acide acrylique
10 % de méthacrylate de tristyryl phénol éthoxylé avec 8 moles d'oxyde d'éthylène et oxypropylé avec 13 moles d'oxyde de propylène.

Essai n° 37 :

Cet essai, illustrant l'invention, met en oeuvre un polymère, qui après neutralisation à 100 % par la soude, est un polymère de viscosité spécifique égale à 4,35 et composé, en pourcentage massique, de :

90 % d'acide acrylique
10 % de méthacrylate de tristyryl phénol éthoxylé avec 25 moles d'oxyde d'éthylène.

Essai n° 38 :

Cet essai, illustrant l'invention, met en oeuvre un polymère, qui après neutralisation à 100 % par la soude, est un polymère de viscosité spécifique égale à 4,38 et composé, en pourcentage massique, de :

90 % d'acide acrylique
10 % de méthacrylate de tristyryl phénol éthoxylé avec 40 moles d'oxyde d'éthylène.

Essai n° 39 :

Cet essai, illustrant l'invention, met en oeuvre un polymère, qui après neutralisation à 100 % par la soude, est un polymère de viscosité spécifique égale à 4,43 et composé, en pourcentage massique, de :

90 % d'acide acrylique
10 % de méthacrylate de tristyryl phénol éthoxylé avec 60 moles d'oxyde d'éthylène.

Essai n° 40 :

Cet essai, illustrant l'invention, met en oeuvre un polymère, qui après neutralisation à 100 % par la soude, est un polymère de viscosité spécifique égale à 2,59 et composé, en pourcentage massique, de :

90 % d'acide acrylique
10 % de méthacrylate, de formule générale (I) dans laquelle le radical hydrophobe R' est un groupe alkyle ramifié à 32 atomes de carbone, m et p sont égaux à 0,q=1 et n égal 25.

Essai n° 41 :

Cet essai, illustrant l'invention, met en oeuvre un polymère, qui après neutralisation à 100 % par la soude, est un polymère de viscosité spécifique égale à 5,49 et composé, en pourcentage massique, de :

80 % d'acide acrylique
2 % d'acrylate d'éthyle
8 % d'acide méthacrylique
10 % de méthacryluréthanne, de formule générale (I) dans laquelle le radical hydrophobe R' est un radical tristyrylphényle, m et p sont égaux à 0,q = 1 et n égal 25.

Essai n° 42 :

Cet essai, illustrant l'invention, met en oeuvre un polymère, qui après neutralisation à 100 % par la soude, est un polymère de viscosité spécifique égale à 3,02 et composé, en pourcentage massique, de :

97 % d'acide acrylique
3 % de méthacrylate de tristyryl phénol éthoxylé avec 25 moles d'oxyde d'éthylène.

Essai n° 43 :

Cet essai, illustrant l'invention, met en oeuvre un polymère, qui après neutralisation à 100 % par la soude, est un polymère de viscosité spécifique égale à 3,31 et composé, en pourcentage massique, de :

95 % d'acide acrylique
5 % de méthacrylate de tristyryl phénol éthoxylé avec 25 moles d'oxyde d'éthylène.

Essai n° 44 :

Cet essai, illustrant l'invention, met en oeuvre un polymère, qui après neutralisation à 100 % par la soude, est un polymère de viscosité spécifique égale à 3,94 et composé, en pourcentage massique, de :

93 % d'acide acrylique
7 % de méthacrylate de tristyryl phénol éthoxylé avec 25 moles d'oxyde d'éthylène.

Essai n° 45 :

Cet essai, illustrant l'invention, met en oeuvre un polymère, qui après neutralisation à 100 % par la soude, est un polymère de viscosité spécifique égale à 3,74 et composé, en pourcentage massique, de :

85 % d'acide acrylique
15 % de méthacrylate de tristyryl phénol éthoxylé avec 25 moles d'oxyde d'éthylène.

Essai n° 46 :

Cet essai, illustrant l'invention, met en oeuvre un polymère, qui après neutralisation à 100 % par la soude, est

un polymère de viscosité spécifique égale à 7,53 et composé, en pourcentage massique, de :

85 % d'acide acrylique
5 % d'acide méthacrylique
10 % de méthacrylate de tristyryl phénol éthoxylé avec 25 moles d'oxyde d'éthylène.

Essai n° 47 :

Cet essai, illustrant l'invention, met en oeuvre un polymère, qui après neutralisation à 100 % par la soude, est un polymère de viscosité spécifique égale à 5,58 et composé, en pourcentage massique, de :

85 % d'acide acrylique
5 % d'acide itaconique
10 % de méthacrylate de tristyryl phénol éthoxylé avec 25 moles d'oxyde d'éthylène.

Essai n° 48 :

Cet essai, illustrant l'invention, met en oeuvre un polymère, qui après neutralisation à 100 % par la soude, est un polymère de viscosité spécifique égale à 7,16 et composé, en pourcentage massique, de :

85 % d'acide acrylique
5 % d'acide maléique
10 % de méthacrylate de tristyryl phénol éthoxylé avec 25 moles d'oxyde d'éthylène.

Essai n° 49 :

Cet essai, illustrant l'invention, met en oeuvre un polymère, qui après neutralisation à 100 % par la soude, est un polymère de viscosité spécifique égale à 6,68 et composé, en pourcentage massique, de :

85 % d'acide acrylique
5% d'acide acrylamido-méthyl-propane-sulfonique
10 % de méthacrylate de tristyryl phénol éthoxylé avec 25 moles d'oxyde d'éthylène.

Essai n° 50 :

Cet essai, illustrant l'invention, met en oeuvre un polymère, qui après neutralisation à 100 % par la soude, est un polymère de viscosité spécifique égale à 4,38 et composé, en pourcentage massique, de :

85 % d'acide acrylique
5 % d'acrylamide
10 % de méthacrylate de tristyryl phénol éthoxylé avec 25 moles d'oxyde d'éthylène.

Essai n° 51 :

Cet essai, illustrant l'invention, met en oeuvre un polymère, qui après neutralisation à 100 % par la soude, est un polymère de viscosité spécifique égale à 5,71 et composé, en pourcentage massique, de :

85 % d'acide acrylique
5 % de phosphate de méthacrylate d'éthylène glycol
10 % de méthacrylate de tristyryl phénol éthoxylé avec 25 moles d'oxyde d'éthylène.

Essai n° 52 :

Cet essai, illustrant l'invention, met en oeuvre un polymère, qui après neutralisation à 100 % par la soude, est un polymère de viscosité spécifique égale à 5,49 et composé, en pourcentage massique, de :

80 % d'acide acrylique
2 % d'acrylate d'éthyle

8 % d'acide méthacrylique
10 % de méthacryluréthanne, de formule générale (I) dans laquelle le radical hydrophobe R' est un radical tristyrylphényle, m et p sont égaux à 0, q =1 et n égal 25.

Essai n° 53 :

Cet essai, illustrant l'invention, met en oeuvre un polymère, qui après neutralisation à 100 % par la soude, est un polymère de viscosité spécifique égale à 1,94 et composé, en pourcentage massique, de :

90 % d'acide acrylique
10 % de méthacrylate de tristyryl phénol éthoxylé avec 25 moles d'oxyde d'éthylène.

Essai n ° 54 :

Cet essai, illustrant l'invention, met en oeuvre un polymère, qui après neutralisation à 100 % par la soude, est un polymère de viscosité spécifique égale à 2,66 et composé, en pourcentage massique, de :

90 % d'acide acrylique
10 % de méthacrylate de tristyryl phénol éthoxylé avec 25 moles d'oxyde d'éthylène.

Essai n° 55 :

Cet essai, illustrant l'invention, met en oeuvre un polymère, qui après neutralisation à 100 % par la soude, est un polymère de viscosité spécifique égale à 3,38 et composé, en pourcentage massique, de :

90 % d'acide acrylique
10 % de méthacrylate de tristyryl phénol éthoxylé avec 25 moles d'oxyde d'éthylène.

Essai n° 56 :

Cet essai, illustrant l'invention, met en oeuvre un polymère, qui après neutralisation à 100 % par la soude, est un polymère de viscosité spécifique égale à 12,04 et composé, en pourcentage massique, de :

90 % d'acide acrylique
10 % de méthacrylate de tristyryl phénol éthoxylé avec 25 moles d'oxyde d'éthylène.

Essai n° 57 :

Cet essai, illustrant l'invention, met en oeuvre un polymère neutralisé en pourcentage molaire à 75 % par la soude et 25 % par la chaux, de viscosité spécifique égale à 4,35 et composé, en pourcentage massique, de :

90 % d'acide acrylique
10 % de méthacrylate de tristyryl phénol éthoxylé avec 25 moles d'oxyde d'éthylène.

Essai n° 58 :

Cet essai, illustrant l'invention, met en oeuvre un polymère neutralisé en pourcentage molaire à 50 % par la soude et 50 % par la chaux, de viscosité spécifique égale à 4,35 et composé, en pourcentage massique, de :

90 % d'acide acrylique
10 % de méthacrylate de tristyryl phénol éthoxylé avec 25 moles d'oxyde d'éthylène.

Essai n° 59 :

Cet essai, illustrant l'invention, met en oeuvre un polymère neutralisé en pourcentage molaire à 25 % par la soude et 75 % par la chaux, de viscosité spécifique égale à 4,35 et composé, en pourcentage massique, de :

90 % d'acide acrylique

10 % de méthacrylate de tristyryl phénol éthoxylé avec 25 moles d'oxyde d'éthylène.

Essai n° 60 :

Cet essai, illustrant l'invention, met en oeuvre un polymère neutralisé en pourcentage molaire à 75 % par la soude et 25 % par lhydroxyde de magnésium, de viscosité spécifique égale à 4,35 et composé, en pourcentage massique, de :

90 % d'acide acrylique
10 % de méthacrylate de tristyryl phénol éthoxylé avec 25 moles d'oxyde d'éthylène.

Essai n° 61 :

Cet essai, illustrant l'invention, met en oeuvre un polymère neutralisé à 100 % par la potasse, de viscosité spécifique égale à 4,35 et composé, en pourcentage massique, de :

90 % d'acide acrylique
10 % de méthacrylate de tristyryl phénol éthoxylé avec 25 moles d'oxyde d'éthylène.

Essai n° 62 :

Cet essai, illustrant l'invention, met en oeuvre un polymère neutralisé à 100 % par l'ammoniaque de viscosité spécifique égale à 4,35 et composé, en pourcentage massique, de :

90 % d'acide acrylique
10 % de méthacrylate de tristyryl phénol éthoxylé avec 25 moles d'oxyde d'éthylène.

Tous les résultats expérimentaux sont consignés dans les tableaux 3.1. et 3.2. suivants.

-TABLEAU 3.1.-

| | Essai n° | Viscosité Brookfield en mPa.s | |
|---|---|---|---|
| | | 10 c/min | 100 t/min |
| Art antérieur | 33 | Impossible | Impossible |
| Art antérieur | 34 | 700 | 270 |
| Invention | 35 | 2840 | 1290 |
| Invention | 36 | 800 | 950 |
| Invention | 37 | 840 | 560 |
| Invention | 38 | 1160 | 800 |
| Invention | 39 | 540 | 730 |
| Invention | 40 | 440 | 515 |
| Invention | 41 | 1360 | 1000 |
| Invention | 42 | 280 | 260 |
| Invention | 43 | 200 | 185 |
| Invention | 44 | 320 | 290 |
| Invention | 45 | 880 | 510 |
| Invention | 46 | 1280 | 570 |
| Invention | 47 | 1050 | 550 |
| Invention | 48 | 1600 | 635 |
| Invention | 49 | 1480 | 640 |

Suite de tableau

| | Essai n° | Viscosité Brookfield en mPa.s | |
|---|---|---|---|
| | | 10 c/min | 100 t/min |
| Invention | 50 | 400 | 260 |
| Invention | 51 | 1400 | 630 |

- TABLEAU 3.2. -

| | Essai n° | Viscosité Brookfield en mPa.s | |
|---|---|---|---|
| | | 10 t/min | 100 t/min |
| Invention | 52 | 1360 | 1000 |
| Invention | 53 | 400 | 460 |
| Invention | 54 | 460 | 470 |
| Invention | 55 | 840 | 600 |
| Invention | 56 | 2160 | 830 |
| Invention | 57 | 350 | 170 |
| Invention | 58 | 680 | 390 |
| Invention | 59 | 480 | 350 |
| Invention | 60 | 720 | 380 |
| Invention | 61 | 1450 | 710 |
| Invention | 62 | 700 | 390 |

La lecture des tableaux 3.1. et 3.2. permet de mettre en évidence l'obtention de suspensions aqueuses de talc selon l'invention ayant des viscosités Brookfield faibles à haute concentration en matière sèche.
Cette lecture permet en outre de constater que l'utilisation d'un polyacrylate couramment utilisé pour la mise en suspension de substances minérales à surface hydrophile ne permet pas d'obtenir des suspensions de talc à faible viscosité Brookfield.

EXEMPLE 5 :

Cet exemple concerne comme dans l'exemple précédent l'utilisation d'un copolymère dont au moins l'un des monomères a une structure tensio-active dans la préparation de suspensions aqueuses de talc, mais en quantité différente.

Dans ce but, avec le même mode opératoire et le même matériel que ceux utilisés dans l'exemple précédent, on mélange du talc Finntalc C10 de la société Finnminerals avec une quantité d'eau nécessaire pour obtenir une suspension à 65 % de concentration en matière sèche et une quantité de copolymère à tester correspondant à 1,0 % en poids sec de copolymère acide sec par rapport au poids total de matière sèche présente dans la suspension.

Essai n ° 63 :

Cet essai, illustrant l'art antérieur, met en oeuvre un polyacrylate de sodium de viscosité spécifique égale à 0,45. La mise en suspension est impossible à cause du blocage de l'agitateur dû à une viscosité trop élevée.

Essai n° 64 :

Cet essai, illustrant l'invention, met en oeuvre un polymère, qui après neutralisation à 100 % par la soude, est un polymère de viscosité spécifique égale à 24 et composé, en pourcentage massique, de :

85 % d'acide acrylique

15 % de méthacrylate de tristyryl phénol éthoxylé avec 25 moles d'oxyde d'éthylène.

Essai n° 65 :

Cet essai, illustrant l'invention, met en oeuvre un polymère, qui après neutralisation à 100 % par la soude, est un polymère de viscosité spécifique égale à 19 et composé, en pourcentage massique, de :

80 % d'acide acrylique
20 % de méthacrylate de tristyryl phénol éthoxylé avec 25 moles d'oxyde d'éthylène et oxypropylé avec 13 moles d'oxyde de propylène.

Essai n° 66 :

Cet essai, illustrant l'invention, met en oeuvre un polymère composé, en pourcentage massique, de :

70 % d'acide acrylique
30 % de méthacrylate de tristyryl phénol éthoxylé avec 25 moles d'oxyde d'éthylène.

Essai n° 67 :

Cet essai, illustrant l'invention, met en oeuvre un polymère composé, en pourcentage massique, de :

60 % d'acide acrylique
40 % de méthacrylate de tristyryl phénol éthoxylé avec 25 moles d'oxyde d'éthylène.

Essai n° 68 :

Cet essai, illustrant l'invention, met en oeuvre un polymère, qui après neutralisation à 100 % par la soude, est un polymère de viscosité spécifique égale à 4,47 et composé, en pourcentage massique, de :

50 % d'acide acrylique
10 % de méthacrylate de tristyryl phénol éthoxylé avec 25 moles d'oxyde d'éthylène
40 % d'acide acrylamido-2-méthyl-2-propane sulfonique.

Essai n° 69 :

Cet essai, illustrant l'invention, met en oeuvre un polymère, qui après neutralisation à 100 % par la soude, est un polymère de viscosité spécifique égale à 3,0 et composé, en pourcentage massique, de :

50 % d'acide acrylique
10 % de méthacrylate de tristyryl phénol éthoxylé avec 25 moles d'oxyde d'éthylène
40 % de phosphate de méthacrylate d'éthylène glycol

Essai n ° 70 :

Cet essai, illustrant l'invention, met en oeuvre un polymère, qui après neutralisation à 100 % par la soude, est un polymère de viscosité spécifique égale à 3,67 et composé, en pourcentage massique, de :

40 % d'acide acrylique
10 % de méthacrylate de tristyryl phénol éthoxylé avec 25 moles d'oxyde d'éthylène
50 % d'acrylamide

Tous les résultats expérimentaux sont consignés dans le tableau 4 suivant :

TABLEAU 4

| | Essai n° | Viscosité Brookfield en mPa.s | |
|---|---|---|---|
| | | 10 t/min | 100t/min |
| Art antérieur | 63 | Impossible | Impossible |
| Invention | 64 | 1000 | 305 |
| Invention | 65 | 500 | 180 |
| Invention | 66 | 1080 | 280 |
| Invention | 67 | 780 | 220 |
| Invention | 68 | 280 | 200 |
| Invention | 69 | 200 | 160 |
| Invention | 70 | 165 | 175 |

La lecture du tableau 4 permet de mettre en évidence l'obtention de suspensions aqueuses de talc selon l'invention ayant des viscosités Brookfield faibles à haute concentration en matière sèche.

Cette lecture permet en outre de constater que l'utilisation d'un polyacrylate couramment utilisé pour la mise en suspension de substances minérales à surface hydrophile ne permet pas d'obtenir des suspensions de talc à faible viscosité Brookfield.

EXEMPLE 6 :

Cet exemple concerne l'utilisation d'un copolymère dont au moins l'un des monomères a une structure tensio-active dans la préparation de suspensions aqueuses de mica.

Dans ce but, avec le même mode opératoire et le même matériel que ceux utilisés dans l'exemple 1, on mélange du mica commercialisé sous le nom de Ascoat 30 par la société Jungbunzlauer GmbH avec une quantité d'eau nécessaire pour obtenir une suspension à 68 % de concentration en matière sèche et une quantité de copolymère à tester correspondant à 0,6 % en poids sec de copolymère sec par rapport au poids total de matière sèche présente dans la suspension.

Essai n° 71 :

Cet essai, illustrant l'art antérieur, met en oeuvre un copolymère neutralisé à 100 % par la soude, de viscosité spécifique 4,7 et composé en pourcentage massique de 90 % d'acide acrylique et 10 % de méthacrylate d'alcool laurique éthoxylé avec 23 moles d'oxyde d'éthylène.

Essai n° 72 :

Cet essai, illustrant l'art antérieur, met en oeuvre un copolymère neutralisé à 100 % par la soude, de viscosité spécifique égale à 4,66 et composé en pourcentage massique de 90 % d'acide acrylique et 10 % de méthacrylate de nonyl phénol éthoxylé avec 30 moles d'oxyde d'éthylène.

Essai n° 73 :

Cet essai, illustrant l'invention, met en oeuvre un polymère neutralisé à 100 % par la soude, de viscosité spécifique égale à 4,0 et composé, en pourcentage massique, de :

90 % d'acide acrylique
10 % de méthacrylate de tristyryl phénol éthoxylé avec 8 moles d'oxyde d'éthylène et oxypropylé avec 13 moles d'oxyde de propylène.

Essai n° 74 :

Cet essai, illustrant l'invention, met en oeuvre un polymère neutralisé à 100 % par la soude, de viscosité spécifique égale à 4,35 et composé, en pourcentage massique, de :

90 % d'acide acrylique
10 % de méthacrylate de tristyryl phénol éthoxylé avec 25 moles d'oxyde d'éthylène.

Essai n° 75 :

Cet essai, illustrant l'invention, met en oeuvre un polymère neutralisé à 100 % par la soude, de viscosité spécifique égale à 4,38 et composé, en pourcentage massique, de :

90 % d'acide acrylique
10 % de méthacrylate de tristyryl phénol éthoxylé avec 40 moles d'oxyde d'éthylène.

Essai n° 76 :

Cet essai, illustrant l'invention, met en oeuvre un polymère neutralisé à 100 % par la soude, de viscosité spécifique égale à 4,43 et composé, en pourcentage massique, de :

90 % d'acide acrylique
10 % de méthacrylate de tristyryl phénol éthoxylé avec 60 moles d'oxyde d'éthylène.

Essai n° 77 :

Cet essai, illustrant l'invention, met en oeuvre un polymère neutralisé à 100 % par la soude, de viscosité spécifique égale à 2,54 et composé, en pourcentage massique, de :

95 % d'acide acrylique
5 % de méthacryluréthanne, de formule générale (I) dans laquelle le radical hydrophobe R' est un groupe alkyle linéaire à 22 atomes de carbone, m et p sont égaux à 0,q=1 et n égal 25.

Essai n° 78 :

Cet essai, illustrant l'invention, met en oeuvre un polymère neutralisé à 100 % par la soude, de viscosité spécifique égale à 1,52 et composé, en pourcentage massique, de :

95 % d'acide acrylique
5 % de méthacrylate, de formule générale (I) dans laquelle le radical hydrophobe R' est un groupe -N-(R"R'") avec R" et R'" des chaînes alkyles linéaires à 12 atomes de carbone, m et p sont égaux à 0, q=2 et n égal 25.

Essai n° 79 :

Cet essai, illustrant l'invention, met en oeuvre un polymère neutralisé à 100 % par la soude, de viscosité spécifique égale à 2,47 et composé, en pourcentage massique, de :

95 % d'acide acrylique
5 % de méthacryluréthanne, de formule générale (I) dans laquelle le radical hydrophobe R' est un groupe alkyle ramifié à 28 atomes de carbone, m et p sont égaux à 0, q=1 et n égal 25.

Essai n° 80 :

Cet essai, illustrant l'invention, met en oeuvre un polymère neutralisé à 100 % par la soude, de viscosité spécifique égale à 1,79 et composé, en pourcentage massique, de :

95 % d'acide acrylique
5 % de méthacryluréthanne, de formule générale (I) dans laquelle le radical hydrophobe R' est un groupe alkyle ramifié à 30 atomes de carbone, m et p sont égaux à 0, q=1 et n égal 25.

Essai n° 81 :

Cet essai, illustrant l'invention, met en oeuvre un polymère neutralisé à 100 % par la soude, de viscosité

spécifique égale à 2,59 et composé, en pourcentage massique, de :

90 % d'acide acrylique
10 % de méthacrylate, de formule générale (I) dans laquelle le radical hydrophobe R' est un groupe alkyle ramifié à 32 atomes de carbone, m et p sont égaux à 0, q=1 et n égal 25.

Essai n° 82 :

Cet essai, illustrant l'invention, met en oeuvre un polymère neutralisé à 100 % par la soude, de viscosité spécifique égale à 3,02 et composé, en pourcentage massique, de :

97 % d'acide acrylique
3 % de méthacrylate de tristyryl phénol éthoxylé avec 25 moles d'oxyde d'éthylène.

Essai n° 83 :

Cet essai, illustrant l'invention, met en oeuvre un polymère neutralisé à 100 % par la soude, de viscosité spécifique égale à 3,94 et composé, en pourcentage massique, de :

93 % d'acide acrylique
7 % de méthacrylate de tristyryl phénol éthoxylé avec 25 moles d'oxyde d'éthylène.

Essai n° 84 :

Cet essai, illustrant l'invention, met en oeuvre un polymère neutralisé à 100 % par la soude, de viscosité spécifique égale à 3,74 et composé, en pourcentage massique, de :

85 % d'acide acrylique
15 % de méthacrylate de tristyryl phénol éthoxylé avec 25 moles d'oxyde d'éthylène.

Essai n° 85 :

Cet essai, illustrant l'invention, met en oeuvre un polymère neutralisé à 100 % par la soude, de viscosité spécifique égale à 4,38 et composé, en pourcentage massique, de :

85 % d'acide acrylique
5% d'acrylamide
10 % de méthacrylate de tristyryl phénol éthoxylé avec 25 moles d'oxyde d'éthylène.

Essai n° 86 :

Cet essai, illustrant l'invention, met en oeuvre un polymère neutralisé à 100 % par la soude, de viscosité spécifique égale à 0,67 et composé, en pourcentage massique, de :

95 % d'acide acrylique
5 % de méthacrylate de tristyryl phénol éthoxylé avec 25 moles d'oxyde d'éthylène.

Essai n° 87 :

Cet essai, illustrant l'invention, met en oeuvre un polymère neutralisé à 100 % par la soude, de viscosité spécifique égale à 1,94 et composé, en pourcentage massique, de :

90 % d'acide acrylique
10 % de méthacrylate de tristyryl phénol éthoxylé avec 25 moles d'oxyde d'éthylène.

Essai n° 88 :

Cet essai, illustrant l'invention, met en oeuvre un polymère neutralisé à 100 % par la soude, de viscosité

spécifique égale à 2,66 et composé, en pourcentage massique, de :

90 % d'acide acrylique
10 % de méthacrylate de tristyryl phénol éthoxylé avec 25 moles d'oxyde d'éthylène.

Tous les résultats expérimentaux sont consignés dans le tableau 5 suivant.

TABLEAU 5

| | Essai n° | Viscosité Brookfield en mPa.s | |
|---|---|---|---|
| | | 10 t/mir | 100t/min |
| Art antérieur | 71 | 5200 | 1800 |
| Art antérieur | 72 | 5200 | 1600 |
| Invention | 73 | 1500 | 560 |
| Invention | 74 | 2550 | 940 |
| Invention | 75 | 3400 | 1300 |
| Invention | 76 | 2500 | 440 |
| Invention | 77 | 1250 | 770 |
| Invention | 78 | 1400 | 500 |
| Invention | 79 | 1100 | 440 |
| Invention | 80 | 1000 | 400 |
| Invention | 81 | 800 | 420 |
| Invention | 82 | 2800 | 1000 |
| Invention | 83 | 2000 | 1300 |
| Invention | 84 | 1000 | 440 |
| Invention | 85 | 1700 | 720 |
| Invention | 86 | 1550 | 670 |
| Invention | 87 | 1400 | 740 |
| Invention | 88 | 2300 | 1030 |

La lecture du tableau 5 permet de mettre en évidence l'obtention de suspensions aqueuses de mica selon l'invention ayant des viscosités Brookfield faibles à haute concentration en matière sèche.
Cette lecture permet en outre de constater que l'utilisation de copolymère de l'art antérieur ne permet pas d'obtenir des suspensions aqueuses de mica à faible viscosité Brookfield.

<u>EXEMPLE 7 :</u>

Cet exemple concerne l'utilisation d'un copolymère dont au moins l'un des monomères a une structure tensio-active dans la préparation de suspensions aqueuses de kaolin.
Dans ce but, avec le même mode opératoire et le même matériel que ceux utilisés dans l'exemple 1, on mélange du kaolin commercialisé sous le nom de SPS par la société ECC avec, une quantité d'eau nécessaire pour obtenir une suspension à 66 % de concentration en matière sèche et une quantité de copolymère à tester correspondant à 0,52 % en poids sec de copolymère acide sec par rapport au poids total de matière sèche présente dans la suspension.

<u>Essai n° 89 :</u>

Cet essai, illustrant l'art antérieur, met en oeuvre un polyacrylate de sodium de viscosité spécifique égale à 0,45.

Essai n° 90 :

Cet essai, illustrant l'invention, met en oeuvre un polymère, qui après neutralisation à 100 % par la soude, est un polymère de viscosité spécifique égale à 0,40 et composé, en pourcentage massique, de :

95 % d'acide acrylique
5 % de méthacrylate de tristyryl phénol éthoxylé avec 25 moles d'oxyde d'éthylène.

Essai n° 91 :

Cet essai, illustrant l'invention, met en oeuvre un polymère, qui après neutralisation à 100 % par la soude, est un polymère de viscosité spécifique égale à 0,42 et composé, en pourcentage massique, de :

95 % d'acide acrylique
5 % de méthacrylate, de formule générale (I) dans laquelle le radical hydrophobe R' est un groupe alkyle ramifié à 32 atomes de carbone, m et p sont égaux à 0, q=1 et n égal 25.

Tous les résultats expérimentaux sont consignés dans le tableau 6 suivant.

TABLEAU 6

| | Essai n° | Viscosité Brookfield en mPa.s | |
|---|---|---|---|
| | | 10 t/min | 100t/min |
| Art antérieur | 89 | 4000 | 850 |
| Invention | 90 | 3720 | 840 |
| Invention | 91 | 3700 | 710 |

La lecture du tableau 6 permet de mettre en évidence l'obtention de suspensions aqueuses de kaolin selon l'invention ayant des viscosités Brookfield faibles à haute concentration en matière sèche.

EXEMPLE 8 :

Cet exemple concerne l'utilisation d'un copolymère dont au moins l'un des monomères a une structure tensio-active dans la préparation de suspensions aqueuses de mélanges de matières minérales qu'elles soient à surface hydrophile ou à surface hydrophobe.

Essai n° 92 :

Cet essai illustre l'invention et consiste à préparer en parallèle une suspension aqueuse de carbonate de calcium et une suspension aqueuse de kaolin, puis à procéder au mélange équipondéral en matière sèche des deux suspensions aqueuses obtenues.

A cet effet, on prépare, à partir d'un marbre provenant d'un gisement norvégien de granulométrie dont 60 % des particules ont un diamètre inférieur à 2 micromètres, une suspension aqueuse de carbonate de calcium en introduisant, en pluie et sous agitation, dans un bécher de deux litres équipé d'un agitateur Pendraulik et contenant de l'eau, une quantité dudit marbre nécessaire pour obtenir une suspension à 70 % de concentration en matière sèche. Ce bécher contient en outre une quantité de copolymère à tester correspondant à 0,5 % en poids de copolymère acide sec par rapport au poids total de matière sèche présente dans la suspension.

Le copolymère mis en oeuvre dans cet essai est un polymère, qui après neutralisation à 100 % par la soude, est un polymère de viscosité spécifique égale à 4,35 et composé, en pourcentage massique, de :

90 % d'acide acrylique
10 % de méthacrylate de tristyryl phénol éthoxylé avec 25 moles d'oxyde d'éthylène.

De la même manière et avec le même matériel on prépare, en même temps, une suspension aqueuse de kaolin (commercialisé sous le nom SPS par la société ECC) ayant une concentration en matière sèche de 63% et une teneur en copolymère à tester égale à 0,5 % en poids sec acide par rapport au poids total de matière sèche présente

dans la suspension.

Après 20 minutes d'agitation de ces deux suspensions, on les mélange en versant, dans un bécher, 714,3 grammes de l'une et 793,7 grammes de l'autre de manière à obtenir une suspension aqueuse à 50 % en poids sec de carbonate de calcium et à 50 % en poids sec de kaolin.

Après 10 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 1900 mPa.s.

Ainsi, la suspension aqueuse obtenue, selon l'invention, est une suspension mixte (50 % / 50 % en poids sec) de carbonate de calcium et de kaolin facilement manipulable à forte concentration en matière sèche (66,3 %).

Essai n° 93 :

Cet essai illustre l'invention et consiste à préparer en parallèle une suspension aqueuse de carbonate de calcium et une suspension aqueuse de kaolin, puis à procéder au mélange pour obtenir une suspension à 70 % en poids sec de carbonate de calcium et 30 % en poids sec de kaolin.

A cet effet, on prépare, à partir d'un marbre provenant d'un gisement norvégien de granulométrie dont 60 % des particules ont un diamètre inférieur à 2 micromètres, une suspension aqueuse de carbonate de calcium en introduisant, en pluie et sous agitation, dans un bécher de deux litres équipé d'un agitateur Pendraulik et contenant de l'eau, une quantité dudit marbre nécessaire pour obtenir une suspension à 70 % de concentration en matière sèche. Ce bécher contient en outre une quantité de copolymère à tester correspondant à 0,5 % en poids de copolymère acide sec par rapport au poids total de matière sèche présente dans la suspension.

Le copolymère mis en oeuvre dans cet essai est un polymère, qui après neutralisation à 100 % par la soude, est un polymère de viscosité spécifique égale à 4,35 et composé, en pourcentage massique, de :

90 % d'acide acrylique
10 % de méthacrylate de tristyryl phénol éthoxylé avec 25 moles d'oxyde d'éthylène.

De la même manière et avec le même matériel on prépare, en même temps, une suspension aqueuse de kaolin (commercialisé sous le nom SPS par la société ECC) ayant une concentration en matière sèche de 63 % et une teneur en copolymère à tester égale à 0,5 % en poids sec acide par rapport au poids total de matière sèche présente dans la suspension.

Après 20 minutes d'agitation de ces deux suspensions, on les mélange en versant, dans un bécher, 1000 grammes de l'une et 476,2 grammes de l'autre de manière à obtenir une suspension aqueuse à 70 % en poids sec de carbonate de calcium et à 30 % en poids sec de kaolin.

Après 10 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 1100 mPa.s.

Ainsi, la suspension aqueuse obtenue, selon l'invention, est une suspension mixte (70 % /30 % en poids sec) de carbonate de calcium et de kaolin facilement manipulable à forte concentration en matière sèche (67,7 %)

Essai n° 94 :

Cet essai illustre 1 Invention et consiste à préparer en parallèle une suspension aqueuse de kaolin et une suspension aqueuse de mica, puis à procéder au mélange pour obtenir une suspension à 50 % en poids sec de kaolin et 50 % en poids sec de mica.

A cet effet, on prépare la suspension aqueuse de kaolin en introduisant, en pluie et sous agitation, dans un bécher de deux litres équipé d'un agitateur Pendraulik et contenant de l'eau, une quantité de kaolin (commercialisé sous le nom de SPS par la société ECC) nécessaire pour obtenir une suspension à 65,1 % de concentration en matière sèche. Ce bécher contient en outre une quantité de copolymère à tester correspondant à 1,0 % en poids de copolymère acide sec par rapport au poids total de matière sèche présente dans la suspension.

Le copolymère mis en oeuvre dans cet essai est un polymère, qui après neutralisation à 100 % par la soude, est un polymère de viscosité spécifique égale à 2,54 et composé, en pourcentage massique, de :

95 % d'acide acrylique
5 % de méthacryluréthanne, de formule générale (I) dans laquelle le radical hydrophobe R' est un groupe alkyle linéaire à 22 atomes de carbone, m et p sont égaux à 0, q = 1 et n égal 25.

De la même manière et avec le même matériel on prépare, en même temps, une suspension aqueuse de mica

(commercialisé sous le nom Ascoat 30 par la société Jungbunzlauer GmbH) ayant une concentration en matière sèche de 67,4 % et une teneur en copolymère à tester égale à 0,6 % en poids sec par rapport au poids total de matière sèche présente dans la suspension.

Après 20 minutes d'agitation de ces deux suspensions, on les mélange en versant, dans un bécher, 760 grammes de l'une et 742 grammes de l'autre de manière à obtenir une suspension aqueuse à 50 % en poids sec de kaolin et 50 % en poids sec de mica.

Après 10 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 732 mPa.s.

Ainsi, la suspension aqueuse obtenue, selon l'invention, est une suspension mixte (50 % / 50 % en poids sec) de kaolin et de mica facilement manipulable à forte concentration en matière sèche (66,2 %).

Essai n° 95 :

Cet essai illustre l'invention et consiste à préparer en parallèle une suspension aqueuse de kaolin et une suspension aqueuse de mica, puis à procéder au mélange pour obtenir une suspension à 75 % en poids sec de kaolin et 25 % en poids sec de mica.

A cet effet, on prépare la suspension aqueuse de kaolin en introduisant, en pluie et sous agitation, dans un bécher de deux litres équipé d'un agitateur Pendraulik et contenant de l'eau, une quantité de kaolin (commercialisé sous le nom de SPS par la société ECC) nécessaire pour obtenir une suspension à 65,1 % de concentration en matière sèche. Ce bécher contient en outre une quantité de copolymère à tester correspondant à 1,0 % en poids de copolymère acide sec par rapport au poids total de matière sèche présente dans la suspension.

Le copolymère mis en oeuvre dans cet essai est un polymère, qui après neutralisation à 100 % par la soude, est un copolymère de viscosité spécifique égale à 2,54 et composé, en pourcentage massique, de :

95 % d'acide acrylique
5 % de méthacryluréthanne, de formule générale (I) dans laquelle le radical hydrophobe R' est un groupe alkyle linéaire à 22 atomes de carbone, m et p sont égaux à 0, q=1 et n égal 25.

De la même manière et avec le même matériel on prépare, en même temps, une suspension aqueuse de mica (commercialisé sous le nom Ascoat 30 par la société Jungbunzlauer GmbH) ayant une concentration en matière sèche de 67,4 % et une teneur en copolymère à tester égale à 0,6 % en poids sec par rapport au poids total de matière sèche présente dans la suspension.

Après 20 minutes d'agitation de ces deux suspensions, on les mélange en versant , dans un bécher, 1152 grammes de l'une et 371 grammes de l'autre de manière à obtenir une suspension aqueuse à 75 % en poids sec de kaolin et 25 % en poids sec de mica.

Après 10 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 1380 mPa.s.

Ainsi, la suspension aqueuse obtenue, selon l'invention, est une suspension mixte (75 % / 25 % en poids sec) de kaolin et de mica facilement manipulable à forte concentration en matière sèche (65,6 %).

Essai n° 96 :

Cet essai illustre l'invention et consiste à préparer en parallèle une suspension aqueuse de talc et une suspension aqueuse de kaolin, puis à procéder au mélange pour obtenir une suspension à 75 % en poids sec de talc et 25 % en poids sec de kaolin.

A cet effet, on prépare la suspension aqueuse de talc en introduisant, en pluie et sous agitation, dans un bécher de deux litres équipé d'un agitateur Pendraulik et contenant de l'eau, une quantité de talc (commercialisé sous le nom de Finntalc C10 par la société Finnminerals) nécessaire pour obtenir une suspension à 64,9 % de concentration en matière sèche. Ce bécher contient en outre une quantité de copolymère à tester correspondant à 1,0 % en poids de copolymère acide sec par rapport au poids total de matière sèche présente dans la suspension.

Le copolymère mis en oeuvre dans cet essai est un polymère qui après neutralisation à 100 % par la soude, est un polymère de viscosité spécifique égale à 4,38 et composé, en pourcentage massique, de :

85 % d'acide acrylique
5 % d'acrylamide
10 % de méthacrylate de tristyryl phénol éthoxylé avec 25 moles d'oxyde d'éthylène.

De la même manière et avec le même matériel on prépare, en même temps, une suspension aqueuse de kaolin (commercialisé sous le nom SPESWHITE par la société ECC) ayant une concentration en matière sèche de 65,1 % et une teneur en copolymère à tester égale à 1,0 % en poids sec acide par rapport au poids total de matière sèche présente dans la suspension.
Après 20 minutes d'agitation de ces deux suspensions, on les mélange en versant, dans un bécher, 1155,6 grammes de l'une et 384 grammes de l'autre de manière à obtenir une suspension aqueuse à 75 % en poids sec de talc et 25 % en poids sec de kaolin.
Après 10 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 1230 mPa.s.
Ainsi, la suspension aqueuse obtenue, selon l'invention, est une suspension mixte (75 % / 25 % en poids sec) de talc et de kaolin facilement manipulable à forte concentration en matière sèche (65,0 %).

Essai n° 97 :

Cet essai illustre l'invention et consiste à préparer en parallèle une suspension aqueuse de talc et une suspension aqueuse de kaolin, puis à procéder au mélange pour obtenir une suspension à 50 % en poids sec de talc et 50 % en poids sec de kaolin.
A cet effet, on prépare la suspension aqueuse de talc en introduisant, en pluie et sous agitation, dans un bécher de deux litres équipé d'un agitateur Pendraulik et contenant de l'eau, une quantité de talc (commercialisé sous le nom de Finntalc C10 par la société Finnminerals) nécessaire pour obtenir une suspension à 64,9 % de concentration en matière sèche. Ce bécher contient en outre une quantité de copolymère à tester correspondant à 1,0 % en poids de copolymère acide sec par rapport au poids total de matière sèche présente dans la suspension.
Le copolymère mis en oeuvre dans cet essai est un polymère, qui après neutralisation à 100 % par la soude, est un polymère de viscosité spécifique égale à 4,38 et composé, en pourcentage massique, de :

85 % d'acide acrylique
5 % d'acrylamide
10 % de méthacrylate de tristyryl phénol éthoxylé avec 25 moles d'oxyde d'éthylène.

De la même manière et avec le même matériel on prépare, en même temps, une suspension aqueuse de kaolin (commercialisé sous le nom SPESWHITE par la société ECC) ayant une concentration en matière sèche de 65,1 % et une teneur en copolymère à tester égale à 1,0 % en poids sec acide par rapport au poids total de matière sèche présente dans la suspension.
Après 20 minutes d'agitation de ces deux suspensions, on les mélange en versant, dans un bécher, 770,5 grammes de l'une et 768 grammes de l'autre de manière à obtenir une suspension aqueuse à 50 % en poids sec de talc et 50 % en poids sec de kaolin.
Après 10 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 2380 mPa.s.
Ainsi, la suspension aqueuse obtenue, selon l'invention, est une suspension mixte (50 % / 50 % en poids sec) de talc et de kaolin facilement manipulable à forte concentration en matière sèche (65,0 %).

Essai n° 98 :

Cet essai illustre l'invention et consiste à préparer en parallèle une suspension aqueuse de talc et une suspension aqueuse de kaolin, puis à procéder au mélange pour obtenir une suspension à 25 % en poids sec de talc et 75 % en poids sec de kaolin.
A cet effet, on prépare la suspension aqueuse de talc en introduisant, en pluie et sous agitation, dans un bécher de deux litres équipé d'un agitateur Pendraulik et contenant de l'eau, une quantité de talc (commercialisé sous le nom de Finntalc C10 par la société Finnminerals) nécessaire pour obtenir une suspension à 64,9 % de concentration en matière sèche. Ce bécher contient en outre une quantité de copolymère à tester correspondant à 1,0 % en poids de copolymère acide sec par rapport au poids total de matière sèche présente dans la suspension.
Le copolymère mis en oeuvre dans cet essai est un polymère, qui après neutralisation à 100 % par la soude, est un polymère de viscosité spécifique égale à 4,38 et composé, en pourcentage massique, de :

85 % d'acide acrylique
5 % d'acrylamide

10 % de méthacrylate de tristyryl phénol éthoxylé avec 25 moles d'oxyde d'éthylène.

De la même manière et avec le même matériel on prépare, en même temps, une suspension aqueuse de kaolin (commercialisé sous le nom SPESWHITE par la société ECC) ayant une concentration en matière sèche de 65,1 % et une teneur en copolymère à tester égale à 1,0 % en poids sec acide par rapport au poids total de matière sèche présente dans la suspension.

Après 20 minutes d'agitation de ces deux suspensions, on les mélange en versant, dans un bécher, 385,2 grammes de l'une et 1152 grammes de l'autre de manière à obtenir une suspension aqueuse à 25 % en poids sec de talc et 75 % en poids sec de kaolin.

Après 10 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 1860 mPa.s.

Ainsi, la suspension aqueuse obtenue, selon l'invention, est une suspension mixte (25 % / 75 % en poids sec) de talc et de kaolin facilement manipulable à forte concentration en matière sèche (65,0 %).

<u>Essai n° 99 :</u>

Cet essai illustre l'invention et consiste à préparer en parallèle une suspension aqueuse de talc et une suspension aqueuse de carbonate de calcium, puis à procéder au mélange pour obtenir une suspension à 75 % en poids sec de talc et 25 % en poids sec de carbonate de calcium.

A cet effet, on prépare la suspension aqueuse de talc en introduisant, en pluie et sous agitation, dans un bécher de deux litres équipé d'un agitateur Pendraulik et contenant de l'eau, une quantité de talc (commercialisé sous le nom de Finntalc C10 par la société Finnminerals) nécessaire pour obtenir une suspension à 64,9 % de concentration en matière sèche. Ce bécher contient en outre une quantité de copolymère à tester correspondant à 1,0 % en poids de copolymère acide sec par rapport au poids total de matière sèche présente dans la suspension.

Le copolymère mis en oeuvre dans cet essai est un polymère, qui après neutralisation, à 100 % par la soude, est un polymère de viscosité spécifique égale à 4,38 et composé, en pourcentage massique, de :

85 % d'acide acrylique
5 % d'acrylamide
10 % de méthacrylate de tristyryl phénol éthoxylé avec 25 moles d'oxyde d'éthylène.

De la même manière et avec le même matériel on prépare, en même temps, à partir d'un marbre provenant d'un gisement norvégien, de granulométrie dont 75 % des particules ont un diamètre inférieur à 1 micromètre, une suspension aqueuse de carbonate de calcium ayant une concentration en matière sèche de 65 % et une teneur en copolymère à tester égale à 1,0 % en poids sec acide par rapport au poids total de matière sèche présente dans la suspension.

Après 20 minutes d'agitation de ces deux suspensions, on les mélange en versant, dans un bécher, 1155,5 grammes de l'une et 384,6 grammes de l'autre de manière à obtenir une suspension aqueuse à 75 % en poids sec de talc et 25 % en poids sec de carbonate de calcium.

Après 10 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 150 mPa.s.

Ainsi, la suspension aqueuse obtenue, selon l'invention, est une suspension mixte (75 % / 25 % en poids sec) de talc et de carbonate de calcium facilement manipulable à forte concentration en matière sèche (65,0 %), ceci à l'aide de l'utilisation d'un seul dispersant.

<u>Essai n° 100 :</u>

Cet essai illustre l'invention et consiste à préparer en parallèle une suspension aqueuse de talc et une suspension aqueuse de carbonate de calcium, puis à procéder au mélange pour obtenir une suspension à 50 % en poids sec de talc et 50 % en poids sec de carbonate de calcium.

A cet effet, on prépare la suspension aqueuse de talc en introduisant, en pluie et sous agitation, dans un bécher de deux litres équipé d'un agitateur Pendraulik et contenant de l'eau, une quantité de talc (commercialisé sous le nom de Finntalc C10 par la société Finnminerals) nécessaire pour obtenir une suspension à 64,9 % de concentration en matière sèche et une quantité de copolymère à tester correspondant à 1,0 % en poids de copolymère acide sec par rapport au poids total de matière sèche présente dans la suspension.

Le copolymère mis en oeuvre dans cet essai est un polymère, qui après neutralisation à 100 % par la soude, est un polymère de viscosité spécifique égale à 4,38 et composé, en pourcentage massique, de :

85 % d'acide acrylique
5 % d'acrylamide
10 % de méthacrylate de tristyryl phénol éthoxylé avec 25 moles d'oxyde d'éthylène.

De la même manière et avec le même matériel on prépare, en même temps, à partir d'un marbre provenant d'un gisement norvégien de granulométrie dont 75 % des particules ont un diamètre inférieur à 1 micromètre, une suspension aqueuse de carbonate de calcium ayant une concentration en matière sèche de 65 % et une teneur en copolymère à tester égale à 1 % en poids sec acide par rapport au poids total de matière sèche présente dans la suspension.
Après 20 minutes d'agitation de ces deux suspensions, on les mélange en versant, dans un bécher, 770,4 grammes de l'une et 769,2 grammes de l'autre de manière à obtenir une suspension aqueuse à 50 % en poids sec de talc et 50 % en poids sec de carbonate de calcium.
Après 10 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 350 mPa.s.
Ainsi, la suspension aqueuse obtenue, selon l'invention, est une suspension mixte (50 % / 50 % en poids sec) de talc et de carbonate de calcium facilement manipulable à forte concentration en matière sèche (65,0 %), ceci à l'aide de l'utilisation d'un seul dispersant.

Essai n° 101 :

Cet essai illustre l'invention et consiste à préparer en parallèle une suspension aqueuse de talc et une suspension aqueuse de carbonate de calcium, puis à procéder au mélange pour obtenir une suspension à 25 % en poids sec de talc et 75 % en poids sec de carbonate de calcium.
A cet effet, on prépare la suspension aqueuse de talc en introduisant, en pluie et sous agitation, dans un bécher de deux litres équipé d'un agitateur Pendraulik et contenant de l'eau, une quantité de talc (commercialisé sous le nom de Finntalc C10 par la société Finnminerals) nécessaire pour obtenir une suspension à 64,9 % de concentration en matière sèche et une quantité de copolymère à tester correspondant à 1,0 % en poids de copolymère acide sec par rapport au poids total de matière sèche présente dans la suspension.
Le copolymère mis en oeuvre dans cet essai est un polymère, qui après neutralisation à 100 % par la soude, est un polymère de viscosité spécifique égale à 4,38 et composé, en pourcentage massique, de :

85 % d'acide acrylique
5 % d'acrylamide
10 % de méthacrylate de tristyryl phénol éthoxylé avec 25 moles d'oxyde d'éthylène. De la même manière et avec le même matériel on prépare, en même temps, à partir d'un marbre provenant d'un gisement norvégien de granulométrie dont 75 % des particules ont un diamètre inférieur à 1 micromètre, une suspension aqueuse de carbonate de calcium ayant une concentration en matière sèche de 65 % et une teneur en copolymère à tester égale à 1 % en poids sec par rapport au poids total de matière sèche présente dans la suspension.

Après 20 minutes d'agitation de ces deux suspensions, on les mélange en versant, dans un bécher, 385,2 grammes de l'une et 1153,8 grammes de l'autre de manière à obtenir une suspension aqueuse à 25 % en poids sec de talc et 75 % en poids sec de carbonate de calcium.
Après 10 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 220 mPa.s.
Ainsi, la suspension aqueuse obtenue, selon l'invention, est une suspension mixte (25 % / 75 % en poids sec) de talc et de carbonate de calcium facilement manipulable à forte concentration en matière sèche (65,0 %), ceci à l'aide de l'utilisation d'un seul dispersant.

Essai n° 102 :

Cet essai illustre l'invention et consiste à préparer directement une suspension aqueuse mixte 50 % en poids sec de carbonate de calcium et 50 % en poids sec de talc.
A cet effet, on prépare, à partir d'un marbre provenant d'un gisement norvégien de granulométrie dont 60 % des particules ont un diamètre inférieur à 2 micromètres, et à partir du talc (commercialisé sous le nom de Finntalc C10 par la société Finnminerals), une suspension aqueuse mixte de carbonate de calcium et de talc en introduisant, en pluie et sous agitation, dans un bécher de deux litres équipé d'un agitateur Pendraulik et contenant de l'eau, une même

quantité dudit marbre et dudit talc nécessaire pour obtenir une suspension à 65 % de concentration en matière sèche. Ce bécher contient en outre une quantité de copolymère à tester correspondant à 2,0 % en poids de copolymère acide sec par rapport au poids total de matière sèche présente dans la suspension.

Le copolymère mis en oeuvre dans cet essai est un polymère, qui après neutralisation à 100 % par la soude, est un polymère de viscosité spécifique égale à 4,35 et composé, en pourcentage massique, de :

90 % d'acide acrylique
10 % de méthacrylate de tristyryl phénol éthoxylé avec 25 moles d'oxyde d'éthylène.

Après 20 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 350 mPa.s.

Ainsi, la suspension aqueuse obtenue, selon l'invention, est une suspension mixte (50% / 50% en poids sec) de carbonate de calcium et de talc facilement manipulable à forte concentration en matière sèche (65 %).

<u>EXEMPLE 9 :</u>

Cet exemple concerne l'utilisation d'un copolymère dont au moins l'un des monomères a une structure tensio-active dans la préparation d'une suspension de carbonate de calcium grossier soumise à un broyage pour l'affiner en une suspension microparticulaire. Dans ce but, une suspension de carbonate de calcium grossier a été préparée à partir d'un carbonate de calcium naturel commercialisé sous le nom BL 200 par la société OMYA SA., en mettant en oeuvre les divers agents d'aide au broyage à tester :

<u>Essai n° 103 :</u>

Cet essai, illustrant l'invention, met en oeuvre un polymère neutralisé à 100 % par la soude, de viscosité spécifique égale à 0,67 et composé, en pourcentage massique, de :

95 % d'acide acrylique
5 % de méthacrylate, de formule générale (I) dans laquelle le radical hydrophobe R' est un groupe alkyle ramifié à 32 atomes de carbone, m et p sont égaux à 0, q=1 et n égal 25.

<u>Essai n° 104</u> :

Cet essai, illustrant l'invention, met en oeuvre un polymère neutralisé à 100 % par la soude, de viscosité spécifique égale à 4,6 et composé, en pourcentage massique, de :

90 % d'acide acrylique
10 % de méthacrylate de tristyrylphénol éthoxylé avec 25 moles d'oxyde d'éthylène.

Pour chaque essai, on a préparé une suspension aqueuse de carbonate de calcium provenant du gisement d'Orgon (France), ayant une granulométrie telle que 19 % des particules ont un diamètre inférieur à 2 micromètres.

La suspension aqueuse a une concentration en matière sèche de 76 % en poids par rapport à la masse totale.

L'agent d'aide au broyage est introduit dans cette suspension selon les quantités indiquées dans le tableau ci-après exprimées en pour cent en poids sec par rapport à la masse de carbonate de calcium sec à broyer.

La suspension circule dans un broyeur du type Dyno-Mill à cylindre fixe et impulseur tournant, dont le corps broyant est constitué par des billes de corindon de diamètre compris dans l'intervalle 0,6 millimètres à 1,0 millimètre.

Le volume total occupé par le corps broyant est de 1 150 centimètres cubes tandis que
sa masse est de 2 900 g. La chambre de broyage a un volume de 1 400 centimètres cubes.

La vitesse circonférentielle du broyeur est de 10 mètres par seconde.

La suspension de carbonate de calcium est recyclée à raison de 18 litres par heure.

La sortie du broyeur Dyno-Mill est munie d'un séparateur de mailles 200 micromètres permettant de séparer la suspension résultant du broyage et le corps broyant.

La température lors de chaque essai de broyage est maintenue à 60°C environ.

A la fin du broyage (T0), on récupère dans un flacon un échantillon de la suspension pigmentaire affinée et on mesure la viscosité à l'aide d'un viscosimètre Brookfield type RVT, à une température de 20°C et une vitesse de rotation de 10 tours par minute et 100 tours par minute avec le mobile adéquat.
La granulométrie est déterminée par la mesure à l'aide d'un Sédigraph 5100 de la société Micromeritics.

Tous les résultats expérimentaux sont consignés dans le tableau 7 suivant.

TABLEAU 7

| | Essai n° | Agent d'aide au broyage utilisé | | Granulométrie % < 1 µm | Viscosité Brookfield en mPa.s 10 t/min 100 t/min | |
|---|---|---|---|---|---|---|
| | | Viscosité spécifique | Consommation % sec/sec | | | |
| Invention | 103 | 0,67 | 1,27 | 31 | 8100 | 1250 |
| Invention | 104 | 4,6 | 1,1 | 45 | 8500 | 2040 |

La lecture du tableau 7 permet de constater l'obtention de suspensions aqueuses de carbonate de calcium affinées à haute concentration en matière sèche.

EXEMPLE 10 :

Cet exemple concerne l'utilisation d'un copolymère dont au moins l'un des monomères a une structure tensio-active dans la préparation d'une suspension aqueuse de mica grossier (commercialisé par la société Jungbunzlauer GmbH sous le nom ASCOAT 30, de granulométrie dont 18 % des particules ont un diamètre inférieur à 1 micromètre) pour l'affiner en une suspension microparticulaire.

Essai n° 105 :

Cet essai, illustrant l'invention, met en oeuvre, avec le même matériel et le même mode opératoire que ceux de l'exemple 9 à l'exception de la matière sèche de la suspension qui est égale à 65 %, un polymère neutralisé à 100 % par la soude, de viscosité spécifique égale à 1,85 et composé, en pourcentage massique, de :

95 % d'acide acrylique
5 % de méthacrylate, de formule générale (I) dans laquelle le radical hydrophobe R' est un groupe alkyle ramifié à 32 atomes de carbone, m et p sont égaux à 0, q=1 et n égal 25.

Les résultats obtenus figurent dans le tableau 8 suivant :

TABLEAU 8

| | Essai n° | Agent d'aide au broyage utilisé | | Granulométrie % < 1 µm | Viscosité Brookfield en mPa.s 10 t/min 100 t/min | |
|---|---|---|---|---|---|---|
| | | Viscosité spécifique | Consommation % sec/sec | | | |
| Invention | 105 | 1,85 | 0,70 | 36,1 | 25000 | 4100 |

La lecture du tableau 8 permet de constater l'obtention de suspensions aqueuses de mica affinées à haute concentration en matière sèche, ce qui est impossible par la mise en oeuvre d'un agent de l'art antérieur.

## Revendications

**1.** Utilisation d'un copolymère comme agent dispersant et/ou d'aide au broyage de matières minérales en suspension aqueuse, quelle que soit la nature hydrophile ou hydrophobe des matières minérales à disperser et/ou broyer, **caractérisée en ce que** le dit copolymère est constitué de :

a) d'au moins un monomère a) à insaturation éthylénique et à fonction carboxylique choisi obligatoirement parmi les monoacides, choisis parmi l'acide acrylique, méthacrylique, crotonique, isocrotonique, cinnamique, auxquels peuvent éventuellement s'ajouter les diacides, choisis parmi l'acide itaconique, fumarique, maléique, citraconique, ou encore les anhydrides d'acides carboxyliques, choisis parmi l'anhydride maléique et les hémiesters de diacides, choisis parmi les monoesters en $C_1$ à $C_4$, des acides maléique ou itaconique, ou leurs mélanges,
b) éventuellement d'au moins un monomère b) à insaturation éthylénique et à fonction sulfonique choisi parmi l'acide acrylamido-méthyl-propane-sulfonique, le méthallylsulfonate de sodium, les acides vinyl sulfonique et

les acides styrène sulfonique ou à fonction phosphorique choisi parmi le phosphate de méthacrylate d'ethylène glycol, le phosphate de méthacrylate de propylène glycol, le phosphate d'acrylate d'éthylène glycol, le phosphate d'acrylate de propylène glycol et leurs éthoxylats ou leurs mélanges,

c) éventuellement d'au moins un monomère c) à insaturation éthylénique et sans fonction carboxylique, choisi dans le groupe constitué par les esters des acides acrylique ou méthacrylique, choisis parmi les acrylates ou méthacrylates de méthyle, éthyle, butyle, 2-éthyl-hexyle, ou par l'acrylonitrile, le méthacrylonitrile, l'acétate de vinyle, le styrène, le méthylstyrène, le diisobutylène, la vinylpyrrolidone, la vinylcaprolactame, ou encore par les amides insaturés choisis parmi l'acrylamide, le méthacrylamide ou leurs dérivés substitués comme le diméthylaminopropyle acrylamide ou méthacrylamide, les esters acryliques ou méthacryliques de glycol, le méthacrylamido-propyl-triméthyl-ammonium chlorure ou sulfate, le méthacrylate de triméthyl-ammonium-éthyl chlorure ou sulfate, ainsi que leurs homologues en acrylate et en acrylamide quaternisés et/ou le diméthyldiallylammonium chlorure,

d) d'au moins un monomère d) oxyalkylé à insaturation éthylénique et terminé par une chaîne hydrophobe, de formule générale (I) :

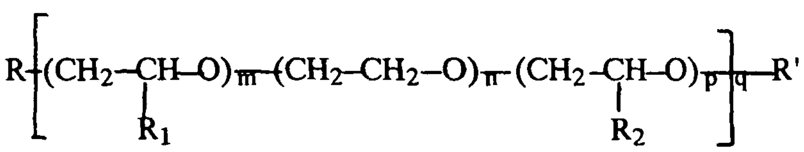

dans laquelle :

- m et p représentent un nombre de motifs d'oxyde d'alkylène inférieur ou égal à 100,
- n représente un nombre de motifs d'oxyde d'éthylène inférieur ou égal à 100,
- q un nombre au moins égal à 1 et tels que :

$$0 < q(n+m+p) \leq 100$$

$R_1$ l'hydrogène ou le radical méthyle ou éthyle,

$R_2$ l'hydrogène ou le radical méthyle ou éthyle,

R représente le radical insaturé polymérisable, appartenant au groupe des esters acrylique, méthacrylique, maléique, itaconique, crotonique, vinylphtalique ainsi que les insaturés uréthannes tels que les acryluréthanne, méthacryluréthanne, $\alpha$-$\alpha$' diméthyl-m-isopropenyl- benzyluréthanne, allyluréthanne.

R' représente le radical hydrophobe choisi parmi le radical tristyrylphényle ou encore les groupes linéaires ou ramifiés alkyle, alkylaryle, arylalkyle, aryle ayant au moins 8 atomes de carbone ou bien les dialkylamines ayant au moins 8 atomes de carbone lorsque R représente les insaturés uréthannes tels que les acryluréthanne, méthacryluréthanne, $\alpha$-$\alpha$' diméthyl-m-isopropenyl- benzyluréthanne, allyluréthanne ,

et

R' représente le radical hydrophobe choisi parmi radical tristyrylphényle ou encore les groupes linéaires ou ramifiés alkyle, alkylaryle, arylalkyle, aryle ayant au moins 30 atomes de carbone ou bien les dialkylamines ayant au moins 22 atomes de carbone lorsque R représente le radical insaturé polymérisable, appartenant au groupe des esters acrylique, méthacrylique, maléique, itaconique, crotonique, vinylphtalique

le total des constituants (a), (b), (c) et (d) étant égal à 100
et **en ce qu'**il a une viscosité spécifique au plus égale à 50 et préférentiellement au plus égale à 25.

**2.** Utilisation d'un copolymère comme agent dispersant et/ou d'aide au broyage selon la revendication 1 **caractérisée en ce que** le copolymère est constitué de :

a) de 99 % à 10 % en poids d'au moins un monomère a)
b) de 0 % à 50 % en poids d'au moins un monomère b)
c) de 0 % à 50 % en poids d'au moins un monomère c)
d) de 1 % à 90 % en poids d'au moins un monomère d)

le total des constituants (a), (b), (c) et (d) étant égal à 100 %
et **en ce qu'**il possède une viscosité spécifique au plus égale à 50 et préférentiellement au plus égale à 25.

3. Utilisation d'un copolymère comme agent dispersant et/ou d'aide au broyage selon la revendication 2 **caractérisée en ce que** le copolymère est constitué de :

a) de 97 % à 50 % en poids d'au moins un monomère a)
b) de 0 % à 50 % en poids d'au moins un monomère b)
c) de 0 % à 50 % en poids d'au moins un monomère c)
d) de 3 % à 50 % en poids d'au moins un monomère d)

le total des constituants (a), (b), (c) et (d) étant égal à 100 %
et **en ce qu'**il possède une viscosité spécifique au plus égale à 50 et préférentiellement au plus égale à 25.

4. Utilisation d'un copolymère comme agent dispersant et/ou d'aide au broyage selon l'une quelconque des revendications 1 à 3 **caractérisée en ce que** R' représente le radical hydrophobe tel que le radical tristyrylphényle lorsque R représente le radical insaturé méthacrylate ou méthacryluréthanne.

5. Utilisation d'un copolymère comme agent dispersant et/ou d'aide au broyage selon l'une quelconque des revendications 1 à 4 **caractérisée en ce que** le copolymère est sous forme acide ou partiellement ou totalement neutralisé par un ou plusieurs agents de neutralisation disposant d'une fonction monovalente choisis dans le groupe constitué par les cations alcalins, en particulier le sodium, le potassium ou l'ammonium ou encore les amines primaires, secondaires ou tertiaires aliphatiques et/ou cycliques telles que la stéarylamine, les éthanolamines (mono-, di-, triéthanolamine), la mono et diéthylamine, la cyclohexylamine, la méthylcyclohexylamine et/ou par un ou plusieurs agents de neutralisation disposant d'une fonction polyvalente choisis dans le groupe constitué par les cations divalents alcalino-terreux, en particulier le magnésium et le calcium, ou encore le zinc, de même que par les cations trivalents, dont en particulier l'aluminium, ou encore, par certains cations de valence plus élevée.

6. Utilisation d'un copolymère comme agent dispersant et/ou d'aide au broyage selon l'une quelconque des revendications 1 à 5 **caractérisée en ce que** ledit copolymère est introduit à raison de 0,05 % à 5 % en poids de la fraction séchée du copolymère par rapport à la masse sèche de la ou des substances minérales.

7. Utilisation d'un copolymère comme agent dispersant et/ou d'aide au broyage de matières minérales selon l'une des revendications 1 à 6 **caractérisée en ce que** la ou les matières minérales sont choisies parmi les substances minérales à surface hydrophile chargée et préférentiellement choisies parmi les carbonates de calcium naturels ou synthétiques ou la dolomie ou les kaolins ou leurs mélanges et très préférentiellement parmi la craie, la calcite, ou le marbre.

8. Utilisation d'un copolymère comme agent dispersant et/ou d'aide au broyage de matières minérales selon l'une des revendications 1 à 6 **caractérisée en ce que** la ou les matières minérales sont choisies parmi les substances minérales à surface hydrophobe et préférentiellement choisie parmi le talc ou le mica ou leurs mélanges.

9. Utilisation d'un copolymère comme agent dispersant et/ou d'aide au broyage de matières minérales selon les revendications 1 à 6 **caractérisée en ce que** les matières minérales sont un mélange de matières minérales à surface hydrophile et/ou un mélange de matières minérales à surface hydrophobe et préférentiellement un mélange de talc et de carbonate de calcium ou de talc et de kaolin.

## Claims

1. Use of a copolymer as a dispersing agent and/or agent for assisting grinding of mineral materials in aqueous suspension, whatever the hydrophilic or hydrophobic nature of the mineral materials to be dispersed and/or ground, **characterised by** the fact that the said copolymer is formed of:

a) at least one ethylenically unsaturated monomer a) with a carboxyl function obligatorily selected from monoacids, selected from acrylic, methacrylic, crotonic, isocrotonic and cinnamic acids, to which can optionally be added diacids selected from itaconic, fumaric, maleic and citraconic acids, or carboxylic acid anhydrides, selected from maleic anhydride and diacid hemiesters, selected from $C_1$ to $C_4$ monoesters of maleic or itaconic acid, or

their mixtures,
b) optionally, at least one ethylenically unsaturated monomer b) with a sulphonic function selected from acrylamido methyl propane sulphonic acid, sodium methallyl sulphonate, vinyl sulphonic acids and styrene sulphonic acids, or with a phosphoric function selected from ethylene glycol methacrylate phosphate, propylene glycol methacrylate phosphate, ethylene glycol acrylate phosphate, propylene glycol acrylate phosphate and their ethoxylates or their mixtures,
c) optionally, at least one ethylenically unsaturated monomer c) without a carboxyl function, selected from the group formed of esters of acrylic or methacrylic acids, selected from methyl, ethyl, butyl and 2-ethyl-hexyl acrylates or methacrylates, or of acrylonitrile, methacrylonitrile, vinyl acetate, styrene, methylstyrene, diisobutylene, vinylpyrrolidone, vinylcaprolactam, or of unsaturated amides selected from acrylamide, methacrylamide, or their substituted derivatives such as dimethylaminopropyl acrylamide or methacrylamide, glycol acrylic or methacrylic esters, methacrylamido propyl trimethyl ammonium chloride or sulphate, trimethyl ammonium ethyl methacrylate chloride or sulphate, and their quaternised acrylate and acrylamide homologues and/or dimethyldiallylammonium chloride,
d) at least one oxyalkylated ethylenically unsaturated monomer d) terminated by a hydrophobic chain, of general formula (I):

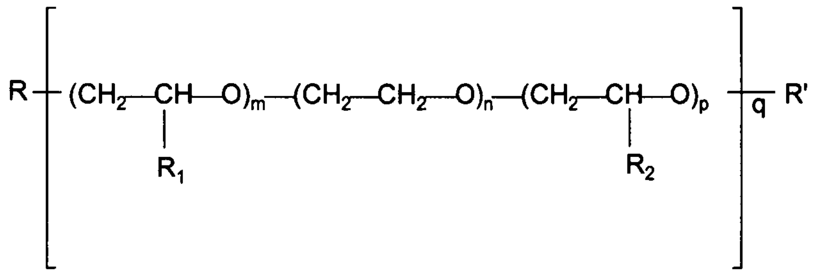

in which:

- m and p represent a number of alkylene oxide structures less than or equal to 100,
- n represents a number of ethylene oxide structures less than or equal to 100,
- q a number at least equal to 1 and these such that:

$$0<q(n+m+p)\leq 100$$

$R_1$ hydrogen or the methyl or ethyl radical,
$R_2$ hydrogen or the methyl or ethyl radical,
R represents the polymerisable unsaturated radical belonging to the group of acrylic, methacrylic, maleic, itaconic, crotonic, and vinylphthalic esters and urethane unsaturates such as acrylurethane, methacrylurethane, α-α' dimethyl-m-isopropenyl-benzylurethane and allylurethane.
R' represents the hydrophobic radical selected from the tristyrylphenyl radical or linear or branched alkyl, alkylaryl, arylalkyl and aryl groups having at least 8 carbon atoms or dialkylamines having at least 8 carbon atoms when R represents urethane unsaturates such as acrylurethane, methacrylurethane, α-α' dimethyl-m-isopropenyl-benzylurethane and allylurethane,
and
R' represents the hydrophobic radical selected from the tristyrylphenyl radical or linear or branched alkyl, alkylaryl, arylalkyl and aryl groups having at least 30 carbon atoms or dialkylamines having at least 22 carbon atoms when R represents the polymerisable unsaturated radical belonging to the group of acrylic, methacrylic, maleic, itaconic, crotonic, and vinylphthalic esters,

the total of components (a), (b), (c) and (d) being equal to 100
and by the fact that it has a specific viscosity at most equal to 50 and preferably at most equal to 25.

**2.** Use of a copolymer as a dispersing agent and/or agent for assisting grinding as described in claim 1,

**characterised by** the fact that the copolymer is formed of:

a) from 99% to 10% by weight of at least one monomer a)
b) from 0% to 50% by weight of at least one monomer b)
c) from 0% to 50% by weight of at least one monomer c)
d) from 1% to 90% by weight of at least one monomer d)

the total of components (a), (b), (c) and (d) being equal to 100%
and by the fact that it has a specific viscosity at most equal to 50 and preferably at most equal to 25.

**3.** Use of a copolymer as a dispersing agent and/or agent for assisting grinding as described in claim 2, **characterised by** the fact that the copolymer is formed of:

a) from 97% to 50% by weight of at least one monomer a)
b) from 0% to 50% by weight of at least one monomer b)
c) from 0% to 50% by weight of at least one monomer c)
d) from 3% to 50% by weight of at least one monomer d)

the total of components (a), (b), (c) and (d) being equal to 100%
and by the fact that it has a specific viscosity at most equal to 50 and preferably at most equal to 25.

**4.** Use of a copolymer as a dispersing agent and/or agent for assisting grinding as described in any one of claims 1 to 3, **characterised by** the fact that R' represents the hydrophobic radical such as the tristyrylphenyl radical when R represents the unsaturated methacrylate or methacrylurethane radical.

**5.** Use of a copolymer as a dispersing agent and/or agent for assisting grinding as described in any one of claims 1 to 4, **characterised by** the fact that the copolymer is in acid form or partially or totally neutralized by one or more neutralizing agents having a monovalent function selected from the group formed of alkaline cations, in particular sodium, potassium or ammonium, or primary, secondary, or tertiary aliphatic and/or cyclic amines such as stearylamine, ethanolamines (mono-, di-, triethanolamine), mono and diethylamine, cyclohexylamine, and methylcyclohexylamine and/or by one or more neutralizing agents having a polyvalent function selected from the group formed of divalent alkaline-earth cations, in particular magnesium and calcium, or zinc, and of trivalent cations, including in particular aluminium, or of certain cations of higher valency.

**6.** Use of a copolymer as a dispersing agent and/or agent for assisting grinding as described in any one of claims 1 to 5, **characterised by** the fact that the said copolymer is introduced at the rate of 0.05% to 5% by weight of the dry fraction of the copolymer relative to the dry mass of the mineral substance or substances.

**7.** Use of a copolymer as a dispersing agent and/or agent for assisting grinding of mineral materials as described in one of claims 1 to 6, **characterised by** the fact that the mineral material or materials are selected from mineral substances having a charged hydrophilic surface and preferably selected from natural or synthetic calcium carbonates or dolomite or kaolins or their mixtures, and very preferably from chalk, calcite, or marble.

**8.** Use of a copolymer as a dispersing agent and/or agent for assisting grinding of mineral materials as described in one of claims 1 to 6, **characterised by** the fact that the mineral material or materials are selected from mineral substances having a hydrophobic surface and preferably selected from talc or mica or their mixtures.

**9.** Use of a copolymer as a dispersing agent and/or agent for assisting grinding of mineral materials as described in claims 1 to 6, **characterised by** the fact that the mineral materials are a mixture of mineral materials having a hydrophilic surface and/or a mixture of mineral materials having a hydrophobic surface and preferably a mixture of talc and calcium carbonate or of talc and kaolin.

## Patentansprüche

**1.** Verwendung eines Copolymers als Dispergier- und/oder Mahlhilfsmittel für mineralische Substanzen in wässriger Suspension je nach der hydrophilen oder hydrophoben Natur der zu dispergierenden und/oder zu mahlenden mineralischen Substanzen, **dadurch gekennzeichnet, dass** das Copolymer aus Folgendem besteht:

a) mindestens einem Monomer a) mit ethylenischer Ungesättigtheit und Carboxylfunktion, das obligatorisch aus Monosäuren, ausgewählt aus Acryl-, Methacryl-, Croton-, Isocroton-, Zimtsäure, ausgewählt wird, zu denen gegebenenfalls Disäuren, ausgewählt aus Itacon-, Fumar-, Malein-, Citraconsäure, oder auch Carbonsäureanhydride, ausgewählt aus Maleinsäureanhydrid und Hemiestern von Disäuren, ausgewählt aus $C_1$- bis $C_4$-Monoestern von Malein- oder Itaconsäure, hinzukommen können, oder ihren Gemischen,
b) gegebenenfalls mindestens einem Monomer b) mit ethylenischer Ungesättigtheit und Sulfonfunktion, ausgewählt aus Acrylamidomethylpropansulfonsäure, Natriummethallylsulfonat, Vinylsulfonsäuren und Styrolsulfonsäuren, oder mit Phosphorsäurefunktion, ausgewählt aus Ethylenglycolmethacrylatphosphat, Propylenglycolmethacrylatphosphat, Ethylenglycolacrylatphosphat, Propylenglycolacrylatphosphat und ihren Ethoxylaten oder ihren Gemischen,
c) gegebenenfalls mindestens einem Monomer c) mit ethylenischer Ungesättigtheit und ohne Carboxylfunktion, ausgewählt aus der Gruppe, bestehend aus Estern von Acryl- oder Methacrylsäure, ausgewählt aus Methyl-, Ethyl-, Butyl-, 2-Ethylhexylacrylaten oder -methacrylaten, oder aus Acrylnitril, Methacrylnitril, Vinylacetat, Styrol, Methylstyrol, Diisobutylen, Vinylpyrrolidon, Vinylcaprolactam, oder auch aus ungesättigten Amiden, ausgewählt aus Acrylamid, Methacrylamid oder ihren substituierten Derivaten, wie Dimethylaminopropylacrylamid oder -methacrylamid, Glycolsäureacryl- oder -methacrylestern, Methacrylamidopropyltrimethylammoniumchlorid oder -sulfat, Trimethylammoniumethylchlorid- oder -sulfatmethacrylat sowie ihren quaternisierten Acrylat- und Acrylamid-Homologen und/oder Dimethyldiallylammoniumchlorid,
d) mindestens ein alkoxyliertes Monomer d) mit ethylenischer Ungesättigtheit und einer endständigen hydrophoben Kette der allgemeinen Formel (I):

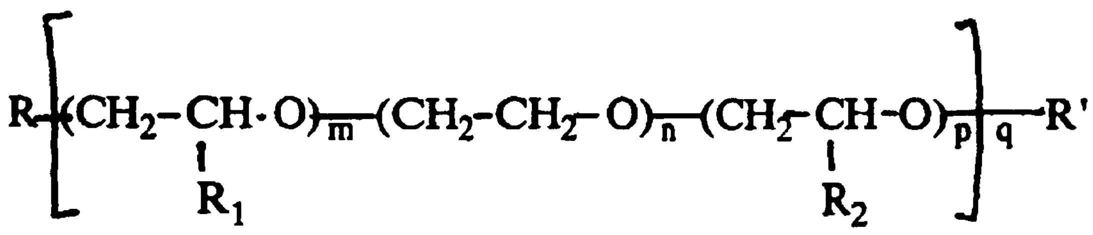

worin:

- m und p eine Anzahl an Alkylenoxid-Motiven von weniger oder gleich 100 darstellen,
- n eine Anzahl an Ethylenoxid-Motiven von weniger oder gleich 100 darstellt,
- q eine Zahl von mindestens gleich 1 ist, wie:

$$0 < q(n+m+p) \leq 100$$

$R_1$ Wasserstoff oder ein Methyl- oder Ethylrest ist,
$R_2$ Wasserstoff oder ein Methyl- oder Ethylrest ist,
R den ungesättigten polymerisierbaren Rest aus der Gruppe der Acryl-, Methacryl-, Maleinsäure-, Itaconsäure-, Crotonsäure-, Vinylphthalsäureester sowie der ungesättigten Urethane, wie Acrylurethan, Methacrylurethan, α-α'-Dimethyl-m-isopropenylbenzyl-urethan, Allylurethan, darstellt,
R' den hydrophoben Rest darstellt, ausgewählt aus dem Tristyrylphenylrest oder auch geraden oder verzweigten Alkyl-, Alkylaryl-, Arylalkyl-, Arylgruppen mit mindestens 8 Kohlenstoffatomen oder Dialkylaminen mit mindestens 8 Kohlenstoffatomen, wenn R ungesättigte Urethane, wie Acrylurethan, Methacrylurethan, α-α'-Dimethyl-m-isopropenylbenzylurethan, Allylurethan, darstellt,
und
R' den hydrophoben Rest darstellt, ausgewählt aus dem Tristyrylphenylrest oder auch geraden oder verzweigten Alkyl-, Alkylaryl-, Arylalkyl-, Arylgruppen mit mindestens 30 Kohlenstoffatomen oder auch Dialkylaminen mit mindestens 22 Kohlenstoffatomen, wenn R den ungesättigten polymerisierbaren Rest aus der Gruppe der Acryl-, Methacryl-, Maleinsäure-, Itaconsäure-, Crotonsäure-, Vinylphthalsäureester darstellt,

wobei die Bestandteile (a), (b), (c) und (d) insgesamt gleich 100 sind, und **dadurch**, dass es eine spezifische Viskosität von höchstens gleich 50 und vorzugsweise höchstens gleich 25 hat.

**2.** Verwendung eines Copolymers als Dispergier- und/oder Mahlhilfsmittel nach Anspruch 1, **dadurch gekennzeichnet, dass** das Copolymer aus Folgendem besteht:

a) 99 Gew.-% bis 10 Gew.-% mindestens eines Monomers a)
b) 0 Gew.-% bis 50 Gew.-% mindestens eines Monomers b)
c) 0 Gew.-% bis 50 Gew.-% mindestens eines Monomers c)
d) 1 Gew.-% bis 90 Gew.-% mindestens eines Monomers d)

wobei die Bestandteile (a), (b), (c) und (d) insgesamt gleich 100% sind,
und **dadurch**, dass es eine spezifische Viskosität von höchstens gleich 50 und vorzugsweise höchstens gleich 25 hat.

**3.** Verwendung eines Copolymers als Dispergier- und/oder Mahlhilfsmittel nach Anspruch 2, **dadurch gekennzeichnet, dass** das Copolymer aus Folgendem besteht:

a) 97 Gew.-% bis 50 Gew.-% mindestens eines Monomers a)
b) 0 Gew.-% bis 50 Gew.-% mindestens eines Monomers b)
c) 0 Gew.-% bis 50 Gew.-% mindestens eines Monomers c)
d) 3 Gew.-% bis 50 Gew.-% mindestens eines Monomers d)

wobei die Bestandteile (a), (b), (c) und (d) insgesamt gleich 100% sind,
und **dadurch**, dass es eine spezifische Viskosität von höchstens gleich 50 und vorzugsweise höchstens gleich 25 hat.

**4.** Verwendung eines Copolymers als Dispergier- und/oder Mahlhilfsmittel nach einem der Ansprüche 1 bis 3, **dadurch gekennzeichnet, dass** R' den hydrophoben Rest, wie den Tristyrylphenylrest, darstellt, wenn R den ungesättigten Methacrylat- oder Methacrylurethanrest darstellt.

**5.** Verwendung eines Copolymers als Dispergier- und/oder Mahlhilfsmittel nach einem der Ansprüche 1 bis 4, **dadurch gekennzeichnet, dass** das Copolymer in saurer oder in einer teilweise oder vollständig durch ein oder mehrere Neutralisationsmittel, die über eine einwertige Funktion verfügen, ausgewählt aus der Gruppe, bestehend aus Alkalikationen, insbesondere Natrium, Kalium oder Ammonium, oder auch aus primären, sekundären oder tertiären aliphatischen und/oder cyclischen Aminen, wie Stearylamin, Ethanolaminen (Mono-, Di-, Triethanolamin), Mono- und Diethylamin, Cyclohexylamin, Methylcyclohexylamin, und/oder durch ein oder mehrere Neutralisationsmittel, die über eine mehrwertige Funktion verfügen, ausgewählt aus der Gruppe, bestehend aus zweiwertigen Erdalkalikationen, insbesondere Magnesium und Calcium, oder auch Zink, ebenso wie aus dreiwertigen Kationen, darunter insbesondere Aluminium, oder auch aus bestimmten Kationen mit höherer Wertigkeit, neutralisierten Form vorliegt.

**6.** Verwendung eines Copolymers als Dispergier- und/oder Mahlhilfsmittel nach einem der Ansprüche 1 bis 5, **dadurch gekennzeichnet, dass** das Copolymer zu 0,05 bis 0,5 Gew.-% der getrockneten Copolymerfraktion, bezogen auf die Trockenmasse der mineralischen Substanz(en), eingebracht wird.

**7.** Verwendung eines Copolymers als Dispergier- und/oder Mahlhilfsmittel für mineralische Substanzen nach einem der Ansprüche 1 bis 6, **dadurch gekennzeichnet, dass** die mineralische(n) Substanz(en) ausgewählt sind aus mineralischen Substanzen mit hydrophiler geladener Oberfläche, und vorzugsweise aus natürlichen oder synthetischen Calciumcarbonaten oder Dolomit oder Kaolinen oder ihren Gemischen, und ganz besonders bevorzugt aus Kreide, Calcit oder Marmor ausgewählt sind.

**8.** Verwendung eines Copolymers als Dispergier- und/oder Mahlhilfsmittel für mineralische Substanzen nach einem der Ansprüche 1 bis 6, **dadurch gekennzeichnet, dass** die mineralische(n) Substanz (en) aus mineralischen Substanzen mit hydrophober Oberfläche und vorzugsweise aus Talk oder Mica oder ihren Gemischen ausgewählt sind.

**9.** Verwendung eines Copolymers als Dispergier- und/oder Mahlhilfsmittel für mineralische Substanzen nach einem der Ansprüche 1 bis 6, **dadurch gekennzeichnet, dass** die mineralischen Substanzen eine Mischung aus mineralischen Substanzen mit hydrophiler Oberfläche und/oder eine Mischung aus mineralischen Substanzen mit hydrophober Oberfläche und vorzugsweise eine Mischung von Talk und Calciumcarbonat oder Talk und Kaolin sind.